# EUROPEAN PATENT APPLICATION

(11) **EP 4 783 540 A1**
(43) Date of publication of application: **29.07.2026**
(21) Application number: 24876396.3
(22) Date of filing: 25.09.2024
(51) Int. Cl.: H04L 45/24, H04L 41/06

(54) **MESSAGE TRANSMISSION METHOD AND APPARATUS, DEVICE AND COMPUTER-READABLE STORAGE MEDIUM**

(30) Priority: 14.10.2023 CN 202311331888
(71) Applicant: HUAWEI TECHNOLOGIES CO., LTD., Shenzhen 518129 (CN)
(72) Inventor: XIONG, Yun, Shenzhen, Guangdong 518129 (CN)
(74) Representative: Goddar, Heinz J.
(86) International application number: PCT/CN2024/121095
(87) International publication number: WO 2025/077578

(57) **Abstract**

This application belongs to the field of communication technologies, and discloses a packet transmission method, apparatus, and device, and a computer-readable storage medium. The method includes: obtaining a plurality of packets including a first packet; determining a plurality of transmission paths corresponding to the plurality of packets, and setting path information in the plurality of packets based on the plurality of transmission paths, where path information in any packet indicates changes of the paths for transmission of the plurality of packets and/or a transmission path of the any packet, and the plurality of transmission paths are used for load balancing of the plurality of packets; and sending the plurality of packets in which the path information has been set. During the packet transmission, a communication apparatus performs path marking on the packets based on the plurality of transmission paths through which transmission of the packets can be performed, and sets the path information, to determine, based on the path information carried in the packets, whether a transmission exception occurs, so that the transmission exception can be detected in a timely manner during the packet transmission.

## Description

This application claims priority to Chinese Patent Application No. 202311331888.2, filed on October 14, 2023 and entitled "PACKET TRANSMISSION METHOD, APPARATUS, AND DEVICE, AND COMPUTER-READABLE STORAGE MEDIUM", which is incorporated herein by reference in its entirety.

### TECHNICAL FIELD

This application relates to the field of communication technologies, and in particular, to a packet transmission method, apparatus, and device, and a computer-readable storage medium.

### BACKGROUND

With advancement of communication technologies, there are increasingly more transmission paths for transmission of packets over a network.

In related technologies, during packet transmission, a packet sending device periodically detects an operating status of transmission paths by using probe packets, through periodic statistics collection, or other manners, to determine potential transmission exceptions. However, the foregoing methods exhibit slow exception awareness and low detection timeliness during packet transmission. Consequently, transmission paths selected based on such delayed transmission detection results lags behind quality changes in the transmission paths, resulting in degraded packet transmission performance.

### SUMMARY

This application provides a packet transmission method, apparatus, and device, and a computer-readable storage medium, to resolve the problems in the related technologies. Technical solutions are as follows.

According to a first aspect, a packet transmission method is provided. The method is applied to a communication apparatus. The method includes: obtaining a plurality of packets including a first packet; determining a plurality of transmission paths corresponding to the plurality of packets, and setting path information in the plurality of packets based on the plurality of transmission paths, where path information in any packet indicates changes of the paths for transmission of the plurality of packets and/or a transmission path of the any packet, and the plurality of transmission paths are used for load balancing of the plurality of packets; and sending the plurality of packets in which the path information has been set.

During the packet transmission, the communication apparatus performs path marking on the packets based on the plurality of transmission paths through which transmission of the packets can be performed, and sets the path information, to determine, based on the path information carried in the packets, whether a transmission exception occurs, so that the transmission exception can be detected in a timely manner during the packet transmission. In addition, balancing of a transmission detection task is implemented through collaboration of the communication apparatus on the transmission paths, thereby reducing implementation complexity and resource costs on a terminal side, achieving more even load balancing, effectively reducing network congestion points, and improving packet transmission performance.

In a possible implementation, the first packet carries a first identifier for determining a network location at which path information needs to be set, and after the obtaining the plurality of packets, the method further includes: when the first identifier carried in the first packet successfully matches a network location of the communication apparatus, performing an operation of setting the path information in the first packet based on the plurality of transmission paths. Whether the path information needs to be set for the first packet is determined based on the first identifier carried in the first packet, to avoid a waste of resources caused by setting the path information for all obtained packets.

In a possible implementation, the path information includes at least one of a path quantity and a path identifier, the path quantity indicates a total quantity of the plurality of transmission paths that are in a network in which the communication apparatus is located and that support load balancing of the plurality of packets, and the path identifier indicates a transmission path for transmission of a packet carrying the path information. The path information carried in the packet is not limited, and may be the path quantity or the path identifier. In addition, regardless of whether the packet carries the path quantity or the path identifier, the path information can be used for transmission detection. Therefore, flexibility is high and universality is wide.

In a possible implementation, the setting the path information in the plurality of packets based on the plurality of transmission paths includes: when the first packet carries an initial value of the path quantity, updating a value of the path quantity based on the initial value of the path quantity and the quantity of the plurality of transmission paths; or when the first packet does not carry an initial value of the path quantity, adding the quantity of the plurality of transmission paths to the first packet as a value of the path quantity. The communication apparatus may add the path quantity to the first packet, or may update the value of the path quantity originally carried in the first packet. The path quantity is set in various manners. Flexibility is high.

In a possible implementation, the initial value of the path quantity is determined based on a transmission path connected between the communication apparatus and an upstream apparatus corresponding to the first packet. The initial value of the path quantity reflects a quantity of transmission paths connected between the communication apparatus and the upstream apparatus. Therefore, the communication apparatus may determine, based on the initial value of the path quantity, a quantity of transmission paths connected to the upstream apparatus, and determine, with reference to the quantity of transmission paths connected to the upstream apparatus and a quantity of transmission paths connected to the communication apparatus, the quantity of transmission paths in the network in which the communication apparatus is located. Therefore, the determined path quantity is of high accuracy.

In a possible implementation, the setting the path information in the plurality of packets based on the plurality of transmission paths includes: determining a reference identifier of a transmission path for transmission of the first packet, where the reference identifier is used to distinguish between different transmission paths in a plurality of transmission paths connected to the communication apparatus; and setting the path identifier in the first packet based on the determined reference identifier of the transmission path, where the path identifier is used to distinguish between different transmission paths in the plurality of transmission paths for load balancing of the plurality of packets in the network in which the communication apparatus is located. The path identifier may be used to distinguish between different transmission paths in the network in which the communication apparatus is located. Compared with the reference identifier that can be used to distinguish only between different transmission paths connected to the communication apparatus, the path identifier has a wider distinguishing range. The path identifier is determined based on the reference identifier, to implement accurate indication of the transmission path.

In a possible implementation, the setting the path identifier in the first packet based on the determined reference identifier of the transmission path includes: when the first packet carries an initial value of the path identifier, updating, based on the initial value of the path identifier, a value of the reference identifier, and the quantity of the plurality of transmission paths, a value of the path identifier carried in the first packet; or when the first packet does not carry an initial value of the path identifier, adding a value of the reference identifier to the first packet as a value of the path identifier. Regardless of whether the first packet carries the initial value of the path identifier, the communication apparatus may set the path identifier in the first packet. A process of setting the path identifier is of high flexibility.

In a possible implementation, determining the plurality of transmission paths corresponding to the plurality of packets includes: detecting path operating statuses of the plurality of transmission paths connected to the communication apparatus; and when a path operating status of any transmission path indicates that the any transmission path is faulty, updating the plurality of transmission paths based on the faulty transmission path, and determining, based on a plurality of updated transmission paths, the plurality of transmission paths corresponding to the plurality of packets. When a transmission path fault exists, the communication apparatus updates information about the plurality of transmission paths connected to the communication apparatus in a timely manner. Path information set based on updated information about the transmission paths is different. Therefore, transmission detection can be implemented based on the path information carried in the packets.

In a possible implementation, the first packet further carries a second identifier for determining a load balancing mode of the first packet, and before the sending the plurality of packets in which the path information has been set, the method further includes: when the load balancing mode indicated by the second identifier is per-packet balancing, selecting, from the plurality of transmission paths, a transmission path for separate transmission of each packet; or when the load balancing mode indicated by the second identifier is per-flow balancing, selecting, from the plurality of transmission paths based on flow information of the plurality of packets, one transmission path for transmission of the plurality of packets. The different load balancing modes are flexibly selected based on the second identifier, so that when the packet has a high delay requirement, transmission of the plurality of packets is performed in the per-flow balancing mode; or when the packet has a low delay requirement, transmission of the plurality of packets is performed in the per-packet balancing mode, thereby implementing flexible transmission of the packets based on a delay requirement.

In a possible implementation, the first packet further carries an initial value of a path quantity and an initial value of a path identifier, and after the determining the plurality of transmission paths corresponding to the plurality of packets, the method further includes: determining, based on the initial value of the path quantity and the initial value of the path identifier carried in the first packet, and a first quantity of transmission paths connected to the communication apparatus, a transmission path for transmission of the first packet; and performing transmission, through the determined transmission path, of a second packet obtained based on the first packet. In addition to transmission detection, the initial value of the path quantity and the initial value of the path identifier carried in the first packet may further indicate the transmission path for transmission of the first packet. Flexibility is high.

In a possible implementation, before the performing transmission, through the determined transmission path, of the second packet obtained based on the first packet, the method further includes: updating, based on the first quantity, the initial value of the path quantity and the initial value of the path identifier carried in the first packet, to obtain the second packet. Before the packet transmission, the value of the path quantity and the value of the path identifier that are carried in the first packet are further updated based on the first quantity, so that a downstream apparatus determines, based on an updated path quantity and an updated path identifier, transmission paths connected to the downstream apparatus.

In a possible implementation, the initial value of the path quantity and the initial value of the path identifier are determined based on a transmission path in a network in which the communication apparatus is located. The initial value of the path quantity and the initial value of the path identifier can be determined based on the transmission paths in the network in which the communication apparatus is located. A determining process is simple.

In a possible implementation, the path information in any packet is used by a receiving apparatus of the plurality of packets to determine whether a transmission exception occurs in the plurality of packets. Transmission exception detection can be implemented by including the path information in the packets. A detection process is simple.

According to a second aspect, a packet transmission method is provided. The method is applied to a receiving apparatus. The method includes: receiving a plurality of packets sent by a communication apparatus; and parsing path information carried in each packet, and determining, based on the path information, whether a transmission exception occurs in the plurality of packets. After receiving the packets, the receiving apparatus may determine, based on the path information in the packets, whether a transmission exception occurs. A detection process is simple, and detection timeliness is high.

In a possible implementation, the method further includes: sending a packet retransmission instruction to a sending apparatus of the plurality of packets when a transmission exception occurs in the plurality of packets, where the packet retransmission instruction instructs the sending apparatus to retransmit at least one of the plurality of packets. When a transmission exception is detected, packet retransmission is triggered. The packet retransmission is performed in a timely manner, to alleviate an impact caused by the transmission exception.

In a possible implementation, the path information includes at least one of a path quantity and a path identifier, and the parsing the path information carried in each packet, and determining, based on the path information, whether a transmission exception occurs in the plurality of packets includes: parsing at least one of path quantities and path identifiers that are carried in the plurality of packets, to obtain a parsing result of the path quantities and/or a parsing result of the path identifiers; and determining, when any parsing result of the path quantities and the path identifiers indicates an exception, that a transmission exception occurs in the plurality of packets. Regardless of whether the packet carries the path quantity or the path identifier, whether a transmission exception occurs can be determined based on the parsing result. Flexibility is high.

In a possible implementation, the parsing at least one of the path quantities and the path identifiers that are carried in the plurality of packets, to obtain the parsing result of the path quantities and/or the parsing result of the path identifiers includes: comparing the path quantities carried in the plurality of packets; and determining, when the path quantities carried in the plurality of packets are different, that the parsing result of the path quantities indicates an exception. Transmission detection can be implemented by comparing the path quantities carried in the plurality of packets. A detection process is simple and efficient.

In a possible implementation, the parsing at least one of the path quantities and the path identifiers that are carried in the plurality of packets, to obtain the parsing result of the path quantities and/or the parsing result of the path identifiers includes: updating reception information of a transmission path of the packets based on a packet sequence number of a received packet and a path identifier, where the reception information is used to collect statistics on packets received on the transmission path; and determining, when the reception information of the transmission paths indicates packet loss, that the parsing result of the path identifiers indicates an exception. Statistics collection of the reception information is implemented based on the path identifiers, so that it can be determined whether a packet is lost. Packet loss detection is simple, and operation complexity is low.

In a possible implementation, before determining, when the reception information of the transmission paths indicates packet loss, that the parsing result of the path identifiers indicates an exception, the method further includes: determining, based on the reception information of the transmission paths, a first sequence number of a packet that is not received on the transmission paths; determining, based on the reception information of the transmission paths, a maximum packet sequence number of a packet in the packets received on the transmission paths; and determining, when the first sequence number is less than the maximum packet sequence number corresponding to the transmission paths, that the packet corresponding to the first sequence number is lost. The first sequence number is compared with the maximum packet sequence number, to exclude a possibility that transmission of the packet corresponding to the first sequence number is still being performed on the transmission path, so that it is determined that the packet corresponding to the first sequence number is lost. Accuracy of packet loss detection is high.

In a possible implementation, the packet retransmission instruction includes the packet sequence number of the packet that is lost. The sending apparatus may resend, based on the packet sequence number included in the packet retransmission instruction, the packet that is lost, to implement accurate retransmission of the packet, and ensure efficient utilization of transmission resources.

According to a third aspect, a packet transmission apparatus is provided. The apparatus is used in a communication apparatus. The apparatus includes: an obtaining module, configured to obtain a plurality of packets including a first packet; a setting module, configured to determine a plurality of transmission paths corresponding to the plurality of packets, and set path information in the plurality of packets based on the plurality of transmission paths, where path information in any packet indicates changes of the paths for transmission of the plurality of packets and/or a transmission path of the any packet, and the plurality of transmission paths are used for load balancing of the plurality of packets; and a sending module, configured to send the plurality of packets in which the path information has been set.

In a possible implementation, the first packet carries a first identifier, and the setting module is further configured to: when the first identifier carried in the first packet successfully matches a network location of the communication apparatus, perform an operation of setting the path information in the first packet based on the plurality of transmission paths.

In a possible implementation, the path information includes at least one of a path quantity and a path identifier, the path quantity indicates a total quantity of the plurality of transmission paths that are in a network in which the communication apparatus is located and that support load balancing of the plurality of packets, and the path identifier indicates a transmission path for transmission of a packet carrying the path information.

In a possible implementation, the setting module is configured to: when the first packet carries an initial value of the path quantity, update a value of the path quantity based on the initial value of the path quantity and the quantity of the plurality of transmission paths; or when the first packet does not carry an initial value of the path quantity, add the quantity of the plurality of transmission paths to the first packet as a value of the path quantity.

In a possible implementation, the initial value of the path quantity is determined based on a transmission path connected between the communication apparatus and an upstream apparatus corresponding to the first packet.

In a possible implementation, the setting module is configured to: determine a reference identifier of a transmission path for transmission of the first packet, where the reference identifier is used to distinguish between different transmission paths in a plurality of transmission paths connected to the communication apparatus; and set the path identifier in the first packet based on the determined reference identifier of the transmission path, where the path identifier is used to distinguish between different transmission paths in the plurality of transmission paths for load balancing of the plurality of packets in the network in which the communication apparatus is located.

In a possible implementation, the setting module is configured to: when the first packet carries an initial value of the path identifier, update, based on the initial value of the path identifier, a value of the reference identifier, and the quantity of the plurality of transmission paths, a value of the path identifier carried in the first packet; or when the first packet does not carry an initial value of the path identifier, add a value of the reference identifier to the first packet as a value of the path identifier.

In a possible implementation, the setting module is configured to: detect path operating statuses of the plurality of transmission paths connected to the communication apparatus; and when a path operating status of any transmission path indicates that the any transmission path is faulty, update the plurality of transmission paths based on the faulty transmission path, and determine, based on a plurality of updated transmission paths, the plurality of transmission paths corresponding to the plurality of packets.

In a possible implementation, the first packet further carries a second identifier for determining a load balancing mode of the first packet, and the setting module is further configured to: when the load balancing mode indicated by the second identifier is per-packet balancing, select, from the plurality of transmission paths, a transmission path for separate transmission of each packet; or when the load balancing mode indicated by the second identifier is per-flow balancing, select, from the plurality of transmission paths based on flow information of the plurality of packets, one transmission path for transmission of the plurality of packets.

In a possible implementation, the first packet further carries an initial value of a path quantity and an initial value of a path identifier, and the setting module is further configured to: determine, based on the initial value of the path quantity and the initial value of the path identifier carried in the first packet, and a first quantity of transmission paths connected to the communication apparatus, a transmission path for transmission of the first packet; and perform transmission, through the determined transmission path, of a second packet obtained based on the first packet.

In a possible implementation, the setting module is further configured to: update, based on the first quantity, the initial value of the path quantity and the initial value of the path identifier carried in the first packet, to obtain the second packet.

In a possible implementation, the initial value of the path quantity and the initial value of the path identifier are determined based on a transmission path in a network in which the communication apparatus is located.

In a possible implementation, the path information in any packet is used by a receiving apparatus of the plurality of packets to determine whether a transmission exception occurs in the plurality of packets.

According to a fourth aspect, a packet transmission apparatus is provided. The apparatus is used in a receiving apparatus. The apparatus includes: a receiving module, configured to receive a plurality of packets sent by a communication apparatus; and a detection module, configured to parse path information carried in each packet, and determine, based on the path information, whether a transmission exception occurs in the plurality of packets.

In a possible implementation, the apparatus further includes: a sending module, configured to: send a packet retransmission instruction to a sending apparatus of the plurality of packets when a transmission exception occurs in the plurality of packets, where the packet retransmission instruction instructs the sending apparatus to retransmit at least one of the plurality of packets.

In a possible implementation, the path information includes at least one of a path quantity and a path identifier, and the detection module is configured to: parse at least one of path quantities and path identifiers that are carried in the plurality of packets, to obtain a parsing result of the path quantities and/or a parsing result of the path identifiers; and determine, when any parsing result of the path quantities and the path identifiers indicates an exception, that a transmission exception occurs in the plurality of packets.

In a possible implementation, the detection module is configured to: compare the path quantities carried in the plurality of packets; and determine, when the path quantities carried in the plurality of packets are different, that the parsing result of the path quantities indicates an exception.

In a possible implementation, the detection module is configured to: update reception information of a transmission path of the packets based on a packet sequence number of a received packet and a path identifier, where the reception information is used to collect statistics on packets received on the transmission path; and determine, when the reception information of the transmission paths indicates packet loss that the parsing result of the path identifiers indicates an exception.

In a possible implementation, the detection module is further configured to: determine, based on the reception information of the transmission paths, a first sequence number of a packet that is not received on the transmission paths; determine, based on the reception information of the transmission paths, a maximum packet sequence number of a packet in the packets received on the transmission paths; and determine, when the first sequence number is less than the maximum packet sequence number corresponding to the transmission paths, that the packet corresponding to the first sequence number is lost.

In a possible implementation, the packet retransmission instruction includes the packet sequence number of the packet that is lost.

According to a fifth aspect, a packet transmission device is provided. The device includes a processor. The processor is configured to load and execute at least one instruction, to cause the packet transmission device to perform the method in any one of the first aspect or the possible implementations of the first aspect, or the method in any one of the second aspect or the possible implementations of the second aspect.

In a possible implementation, the device includes a memory, the memory is coupled to the processor, and the memory stores the at least one instruction.

According to a sixth aspect, a packet transmission system is provided. The system includes a communication apparatus and a receiving apparatus. The communication apparatus is configured to perform the method in any one of the first aspect or the possible implementations of the first aspect, and the receiving apparatus is configured to perform the method in any one of the second aspect or the possible implementations of the second aspect.

According to a seventh aspect, a computer-readable storage medium is provided, where the computer-readable storage medium stores at least one instruction, and the instruction is loaded and executed by a processor to implement the packet transmission method in any one of the first aspect or the possible implementations of the first aspect, or the packet transmission method in any one of the second aspect or the possible implementations of the second aspect.

According to an eighth aspect, a computer program (product) is provided. The computer program (product) includes a computer program/instruction, and the computer program/instruction is executed by a processor, to cause a computer to implement the packet transmission method in any one of the first aspect or the possible implementations of the first aspect, or the packet transmission method in any one of the second aspect or the possible implementations of the second aspect.

According to a ninth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is caused to perform the method in any one of the first aspect or the possible implementations of the first aspect, or the method in any one of the second aspect or the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a tenth aspect, a chip is provided, including a processor, configured to invoke, from a memory, running program instructions or code stored in the memory and run the program instructions or the code, to cause a communication device in which the chip is installed to perform the methods in the foregoing aspects.

According to an eleventh aspect, another chip is provided, including an input interface, an output interface, a processor, and a memory. The input interface, the output interface, the processor, and the memory are connected through an internal connection path. The processor is configured to execute code in the memory, and when the code is executed, the processor is configured to perform the methods in the foregoing aspects.

It should be understood that, for beneficial effects achieved by the technical solutions of the third aspect to the eleventh aspect of this application and the corresponding possible implementations, refer to the foregoing technical effects of the first aspect and the corresponding possible implementations of the first aspect or the second aspect and the corresponding possible implementations of the second aspect. Details are not described herein again.

### BRIEF DESCRIPTION OF DRAWINGS

FIG. 1 is a diagram of an implementation environment according to an embodiment of this application;
FIG. 2 is a diagram of a network topology structure according to an embodiment of this application;
FIG. 3 is a flowchart of a packet transmission method according to an embodiment of this application;
FIG. 4 is a diagram of another network topology structure according to an embodiment of this application;
FIG. 5 is a diagram of still another network topology structure according to an embodiment of this application;
FIG. 6 is a diagram of packet transmission according to an embodiment of this application;
FIG. 7 is a diagram of carrying path information according to an embodiment of this application;
FIG. 8 is a diagram of a transmission path fault according to an embodiment of this application;
FIG. 9 is a diagram of a packet transmission process according to an embodiment of this application;
FIG. 10 is a diagram of still yet another network topology structure according to an embodiment of this application;
FIG. 11 is a diagram of statistics collection on reception information of a transmission path according to an embodiment of this application;
FIG. 12 is a diagram of a structure of reception information according to an embodiment of this application;
FIG. 13 is a diagram of a structure of a packet transmission apparatus according to an embodiment of this application;
FIG. 14 is a diagram of a structure of another packet transmission apparatus according to an embodiment of this application;
FIG. 15 is a diagram of a structure of a network device according to an embodiment of this application; and
FIG. 16 is a diagram of a structure of another network device according to an embodiment of this application.

### DESCRIPTION OF EMBODIMENTS

Terms used in implementations of this application are only used to explain specific embodiments of this application, but are not intended to limit this application. To make the objectives, technical solutions, and advantages of this application clearer, the following further describes implementations of this application in detail with reference to the accompanying drawings.

With development of communication technologies, a communication apparatus may select, based on path statuses of transmission paths, different transmission paths to perform transmission of a plurality of packets, to implement load balancing of the plurality of packets.

In related technologies, a sending apparatus configured on a terminal side of transmission paths detects a path status of each transmission path, to select, based on the detected path status, a transmission path for packet transmission, implementing multipath load balancing. During packet transmission through transmission paths, path quality of the transmission paths is periodically measured by sending probe packets, periodically collecting statistics on a transmission delay or a packet quantity, or other manners, to further determine potential transmission exceptions in packets based on the measured path quality. However, the aforementioned packet transmission methods exhibit slow exception awareness and low detection timeliness.

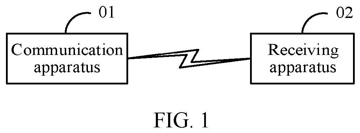

Embodiments of this application provide a packet transmission method, to set path information in a packet during packet transmission, to implement transmission exception detection based on the path information in the packet. FIG. 1 is a diagram of an implementation environment of a packet transmission method according to an embodiment of this application. The implementation environment includes a communication apparatus 01 and a receiving apparatus 02. A plurality of transmission paths for transmission of packets may be established between the communication apparatus 01 and the receiving apparatus 02 in a wired or wireless network manner. The receiving apparatus 02 may be an aggregation point of the plurality of transmission paths, for example, an endpoint of a tunnel, an endpoint of an overlay (overlay) path, or a terminal of the packets (for example, a destination end of a data stream). For example, after obtaining packets to be transmitted, the communication apparatus 01 sets path information in the packets, and sends, to the receiving apparatus 02, the packets in which the path information has been set. The receiving apparatus 02 parses the received packets, to determine, based on the path information in the packets, whether a transmission exception occurs in the packets.

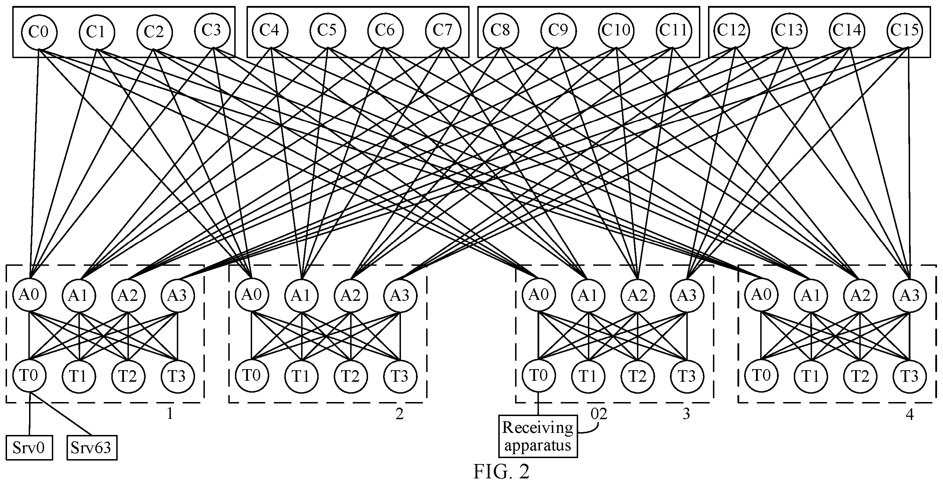

FIG. 2 is a diagram of a network topology structure according to an embodiment of this application. A network in FIG. 2 includes a core layer, an aggregation layer, and an access layer. A network node configured at the core layer is identified by C in FIG. 2, a network node configured at the aggregation layer is identified by A in FIG. 2, and a network node configured at the access layer is identified by T in FIG. 2. Numbers of network nodes in FIG. 2 are used to distinguish between different network nodes at a same layer of the network. In a possible case, the communication apparatus 01 may be a network node configured at the access layer in FIG. 2, or may be a network node configured at the aggregation layer, or may be a network node configured at the core layer, or may be a terminal (for example, a server) that accesses the network shown in FIG. 2. In addition, a packet transmission path may include a plurality of communication apparatuses 01. For example, both network nodes T0 and A1 in a dashed-line box 1 in FIG. 2 perform operations related to the communication apparatus 01. In other words, the communication apparatus 01 may be the network nodes T0 and Al in FIG. 2.

In addition, the communication apparatus 01 and the receiving apparatus 02 may be directly or indirectly connected. For example, the communication apparatus 01 is a network node T0 in a dashed-line box 3 in FIG. 2. The network node T0 is further configured to connect to a receiving apparatus 02 in FIG. 2, to send, to the receiving apparatus 02, a first packet in which path information is set. In this case, the network node T0 used as the communication apparatus 01 is directly connected to the receiving apparatus 02 through a transmission path. For example, the communication apparatus 01 is the network node T0 in the dashed-line box 1 in FIG. 2, and the receiving apparatus 02 is the receiving apparatus 02 connected to the network node T0 in the dashed-line box 3. In this case, the network node T0 used as the communication apparatus 01 is indirectly connected to the receiving apparatus 02 through network nodes at the aggregation layer and the core layer.

In a possible case, the communication apparatus 01 and the receiving apparatus 02 may be configured in a same network as shown in FIG. 1 and FIG. 2, or may be configured in different networks. For example, the communication apparatus 01 is a sending apparatus (for example, an egress network device of a data center) at a network endpoint of a first data center, and the receiving apparatus 02 is a receiving apparatus (for example, an ingress network device of a data center) at a network source end of a second data center. The communication apparatus 01 sends packets to the receiving apparatus 02, to implement cross-network transmission of the packets. A network in which the communication apparatus 01 and the receiving apparatus 02 are located is not limited in embodiments of this application. For example, the communication apparatus 01 and the receiving apparatus 02 may be configured in a multi-level switching network (Clos networking) in a data communication network (data communication network, DCN) shown in FIG. 2, or may be configured in another DCN network, or may be configured in different network scenarios such as a high-performance computing (high-performance computing, HPC) network, a cloud network, and a campus network.

In a possible implementation, the communication apparatus 01 and the receiving apparatus 02 may be any device having a packet forwarding function. For example, the communication apparatus 01 and the receiving apparatus 02 may be terminal devices such as desktop computers, notebook computers, or smartphones, or may be servers, for example, central servers, edge servers, or local servers in a local data center. The server may be a physical server, or may be a cloud server that provides a cloud computing service. For example, the communication apparatus 01 and the receiving apparatus 02 may alternatively be forwarding devices such as gateways, routers, and switches, or network adapters configured in the devices.

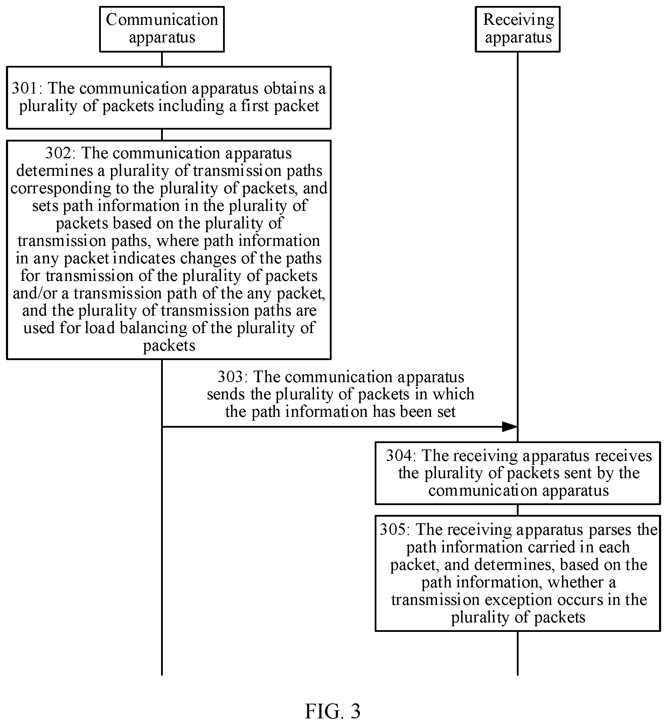

The packet transmission method provided in embodiments of this application may be applied to the implementation scenario shown in FIG. 1 or FIG. 2. The method may be interactively performed by the communication apparatus and the receiving apparatus. A flowchart of the packet transmission method is shown in FIG. 3, including S301 to S305.

S301: The communication apparatus obtains a plurality of packets including a first packet.

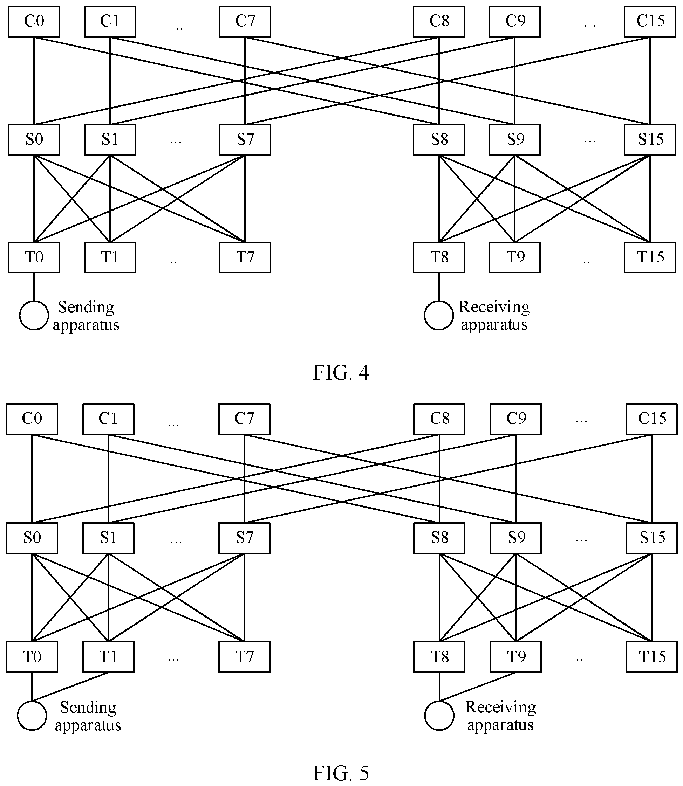

For example, the communication apparatus is an apparatus configured on a packet transmission path, and is configured to send the packets to the receiving apparatus, to implement transmission of the packets. The communication apparatus may be configured at a source end of the packet transmission path. FIG. 4 is a diagram of a network topology structure according to an embodiment of this application. In FIG. 4, a transmission connection is established between a sending apparatus and a receiving apparatus through Clos networking. In this case, the communication apparatus may be the sending apparatus in FIG. 4. In addition, the communication apparatus may be a forwarding apparatus configured on the transmission path, for example, a network node T0, S0, or C0 in FIG. 4. In FIG. 4, T represents top of rack (top of rack, TOR) switch, S represents spine (SPINE), and C represents core (Core).

A quantity of communication apparatuses configured on the packet transmission path is not limited in this embodiment of this application, and there may be one or more communication apparatuses. When transmission of the packets is performed via a plurality of communication apparatuses, each communication apparatus processes the received packets, to implement transmission of the packets. Because processing processes of different quantities of communication apparatuses are similar, the following temporarily uses any communication apparatus as an example to describe a processing process of the communication apparatus.

Regardless of where the communication apparatus is configured, the communication apparatus can obtain a plurality of packets that need to be forwarded. Optionally, the communication apparatus may receive a plurality of packets sent by another upstream apparatus. In a case in which the communication apparatus is a forwarding apparatus, the another upstream apparatus is, for example, the sending apparatus in FIG. 4. In a case in which the communication apparatus is a sending apparatus, the another upstream apparatus is, for example, a forwarding apparatus that establishes a communication connection to the sending apparatus and that is in another data center network.

In a possible case, the communication apparatus may alternatively generate a plurality of packets to be transmitted. For example, the communication apparatus is a terminal used as a sending apparatus. The communication apparatus generates, based on service running, a plurality of service packets to be transmitted, and uses the plurality of service packets as the plurality of packets. In addition, packet types corresponding to the plurality of packets may be the same. For example, the plurality of packets are all game-type packets. The packet types of the plurality of packets may alternatively be different. For example, the plurality of packets include a video-type packet, a picture-type packet, a voice-type packet, and the like. Regardless of a manner in which the plurality of packets are obtained, the plurality of packets include the first packet, where the first packet may be one of the plurality of packets. In the following embodiments, the first packet is used as an example to describe a process of setting path information. "First" in the term "first packet" is intended to differentiate a packet that is currently being processed by the communication apparatus, and is not used to limit a sequence and an importance degree of the packet. In other words, the first packet may be any packet to be transmitted.

S302: The communication apparatus determines a plurality of transmission paths corresponding to the plurality of packets, and sets path information in the plurality of packets based on the plurality of transmission paths, where path information in any packet indicates changes of the paths for transmission of the plurality of packets and/or a transmission path of the any packet, and the plurality of transmission paths are used for load balancing of the plurality of packets.

For example, after obtaining the packets, the communication apparatus parses a destination address carried in the packets, and determines, based on the destination address, the plurality of transmission paths corresponding to the packets. The plurality of transmission paths corresponding to the packets are transmission paths that are connected to the communication apparatus and that can be used to send the packets to the destination address. FIG. 4 is still used as an example. The communication apparatus is the network node T0 in FIG. 4. In this case, there are eight transmission paths corresponding to the packets: T0-S0, T0-S1, ..., and T0-S7. In some cases, the plurality of transmission paths corresponding to the packets are transmission paths included in an equal-cost multipath (equal-cost multipath, ECMP) group, and the plurality of transmission paths may be included in a plurality of ECMP groups, or may be included in one ECMP group. In addition, the plurality of transmission paths may be all transmission paths included in one ECMP group, or may be some transmission paths included in one ECMP group. For example, because a quantity of transmission paths included in the ECMP group is far greater than a quantity of packets to be transmitted, for example, the quantity of transmission paths is greater than a product of the quantity of packets multiplied by a coefficient threshold that is empirically set, the communication apparatus may divide the ECMP group into a plurality of subgroups based on packet flows, where one packet flow corresponds to at least one subgroup, that is, transmission of a plurality of packets included in the packet flow is performed through transmission paths included in the subgroup. For example, the plurality of transmission paths corresponding to the packets may alternatively be transmission paths included in an unequal cost multipath (unequal cost multipath, UCMP) group, port trunk (trunk) links, or the like. A case of the UCMP group is similar to that of the ECMP group. For details, refer to the foregoing related descriptions. Details are not described herein again.

In a possible implementation, the plurality of packets obtained by the communication apparatus carry a same destination address, in other words, the plurality of packets need to be forwarded by the communication apparatus to a same receiving apparatus. In addition, because the plurality of transmission paths corresponding to the packets may all be used for sending the packets from the communication apparatus to the receiving apparatus, the communication apparatus may perform load balancing on the plurality of packets by using the plurality of transmission paths corresponding to the packets, to perform transmission of the plurality of packets by using different transmission paths.

After determining the plurality of transmission paths, the communication apparatus may perform transmission of the plurality of packets by using the plurality of transmission paths. Before performing transmission of the packets, the communication apparatus further determines whether the path information needs to be set for the packets. For example, the first packet included in the plurality of packets carries a first identifier, and the first identifier is used to determine a network location at which path information needs to be set. In this case, the communication apparatus may parse the first identifier carried in the first packet, and when the first identifier carried in the first packet successfully matches a network location of the communication apparatus, perform an operation of setting the path information in the first packet.

In a possible implementation, the first identifier is carried in a packet field (for example, a control information (CTRL_INFO) field) of the first packet, and a length of the field is Bit[N1:0], where N1 is any positive integer. The communication apparatus reads a value of the CTRL_INFO field, converts the value into being a binary form, and determines, based on a bit position in which 1 in the binary form is located, the network location at which the path information needs to be set. For example, the value of the CTRL_INFO field is 0, and the binary form is b'0000, where b indicates a bit. Because there is no bit whose value is 1, it indicates that the path information does not need to be set for the first packet. For example, the value of the CTRL_INFO field is 1, and the binary form is b'0001, indicating that a first-level network node needs to set the path information for the first packet. For example, the value of the CTRL_INFO field is 2, and the binary form is b'0010, indicating that a second-level network node needs to set the path information for the first packet. For example, the value of the CTRL_INFO field is 3, and the binary form is b'0011, indicating that both the first-level network node and the second-level network node need to set the path information for the first packet. The first-level network node and the second-level network node may be determined based on layers of a transmission network. For example, in FIG. 4, the first-level network node is a network node T located at an access layer, and the second-level network node is a network node S located at an aggregation layer. In addition, the first identifier may be used to determine the network location based on the bit position in which 1 is located, or may be used to determine the network location based on a bit position in which another number is located, for example, 0 or a number included in another number system. This is not limited in this embodiment of this application.

When the first identifier successfully matches the network location of the communication apparatus, the communication apparatus determines that the path information needs to be set for the first packet. For example, a value of the first identifier is 1, and the communication apparatus is the network node T0 in FIG. 4. In this case, the communication apparatus is in a first-level network, and the network location successfully matches the first identifier. Therefore, the communication apparatus determines that the matching succeeds. Optionally, the communication apparatus may detect some packets in the plurality of packets, and determine, based on a detection result of the some packets, whether the path information needs to be set for the packets. For example, the plurality of packets belong to a same packet flow. Because a same operation needs to be performed on packets included in a same packet flow, when a first identifier of any packet indicates that the path information needs to be set, the communication apparatus determines that the operation of setting the path information needs to be performed on all the packets included in the packet flow. Alternatively, the communication apparatus may detect each packet, and determine, based on a detection result of the packet, whether the path information needs to be set for the packet. For example, the plurality of packets include a packet for which the path information needs to be set, and also include a packet for which the path information does not need to be set and that only needs to be forwarded. The communication apparatus may select, from the plurality of packets based on the first identifier, the packet for which the path information needs to be set, to control a quantity of times of setting the path information, thereby improving efficiency.

In addition, when the communication apparatus parses the first identifier in the packet, and the first identifier successfully matches the network location, the communication apparatus further updates the first identifier carried in the packet, and adjusts a value assigned to a field that is in the first identifier and that is of the network location of the communication apparatus from 1 to 0. For example, as shown in FIG. 4, a value of the first identifier of the first packet received by a communication apparatus T0 is 3, and a binary form is b'0011. Therefore, the communication apparatus T0 determines that the path information of the first packet needs to be set, and adjusts the 0^{th} bit from 1 to 0. In this way, the binary form is updated to b'0010, and the value of the first identifier is changed to 2. Alternatively, in FIG. 4, a value of the first identifier of the first packet received by a communication apparatus S0 is 2, and a binary form is b'0010. Therefore, the communication apparatus S0 determines that the path information of the first packet needs to be set, and adjusts the 1^{st} bit from 1 to 0. In this way, the binary form is updated to b'0000, and the value of the first identifier is changed to 0. The value of the first identifier is updated, to ensure that communication apparatuses at a network location of a same layer set the path information for the packet once, to avoid redundant calculation of a transmission path caused because communication apparatuses at the network location of the layer continue calculating the transmission path included in the network location of the layer when the packet arrives at the network location of the layer again, for example, communication apparatuses S8 and T8 in FIG. 4.

In addition to determining, based on the first identifier carried in the first packet, whether the path information needs to be set, the communication apparatus may further determine, based on experience, whether the path information needs to be set. For example, the network further includes a controller connected to the communication apparatus. The controller selects, based on a topology structure in the network and with reference to a network status, a communication apparatus for which the path information needs to be set, and the selected communication apparatus determines, based on an indication or a configuration of the controller, that the path information needs to be set. For example, if resources on a terminal side are insufficient, or traffic at a SPINE location in the network is low and there is no congestion, the controller sets the path information for the packet at a location of a network node T. The foregoing process of selecting the communication apparatus with reference to the network status may be determined through path negotiation. A path negotiation process is similar to a packet transmission process, and is also implemented by setting path information in a packet in a packet transmission process. A difference lies in that the packet to be transmitted in the path negotiation process is a link setup request packet. For detailed descriptions, refer to S302 to S305. Details are not described herein. Alternatively, it is determined, based on experience, that all communication apparatuses on the packet transmission path need to be configured with a function of setting path information for a packet. In addition, determining, based on experience, whether the communication apparatus needs to set the path information may alternatively be implemented based on the network location of the communication apparatus. For example, it is determined that the communication apparatus needs to set the path information for the packet at a specified location of the transmission path. The specified location may be empirically set with reference to a topology structure, for example, the first-level network or a second-level network in FIG. 4.

Regardless of a manner in which the communication apparatus determines that the path information needs to be set for the packet, the communication apparatus may set the path information in the packet based on the plurality of transmission paths after determining that the path information needs to be set for the packet. For example, the path information includes at least one of a path quantity and a path identifier. The path quantity indicates a total quantity of the plurality of transmission paths that are in the network in which the communication apparatus is located and that support load balancing of the plurality of packets, namely, a total quantity of selectable transmission paths through which the packet in the network may pass. FIG. 5 is a diagram of a network topology structure according to an embodiment of this application. In FIG. 5, both T0 and T1 are communication apparatuses for load balancing, and transmission paths for load balancing in the network include T0-S0-C0, T0-S0-C8, T0-S1-C1, T0-S1-C9, ..., T0-S7-C7, T0-S7-C15, T1-S0-C0, T1-S0-C8, T1-S1-C1, T1-S1-C9, ..., T1-S7-C7, and T1-S7-C15. To be specific, a total quantity of transmission paths through which a packet to be transmitted may pass from a first-level network node to a third-level network node is 32, and one or more transmission paths may be selected from the 32 transmission paths for transmission of the packet. In addition, communication apparatuses connected to different transmission paths may be different from or may be the same as those in the foregoing example. For example, if two links are separately connected between a communication apparatus 1, a communication apparatus 2, and a communication apparatus 3, links connecting the communication apparatus 1 and the communication apparatus 2 and links connecting the communication apparatus 2 and the communication apparatus 3 may form four transmission paths. The four transmission paths are connected to the same communication apparatuses: the communication apparatus 1, the communication apparatus 2, and the communication apparatus 3 in the example.

A process of setting the path quantity in the first packet is not limited in this embodiment of this application. The communication apparatus may add the path quantity to the first packet. For example, when the first packet does not carry an initial value of the path quantity, the quantity of the plurality of transmission paths is added to the first packet as a value of the path quantity. The initial value of the path quantity indicates a value of a path quantity originally carried in the first packet. The plurality of transmission paths indicate transmission paths that are connected to the communication apparatus and that can be used for load balancing of transmission of the first packet. The first packet does not carry the initial value of the path quantity. In other words, before the first packet arrives at the communication apparatus, load balancing is not recorded, statistics collection of a quantity of transmission paths that can be used for load balancing in the network is started from the communication apparatus, and a transmission path through which the first packet may pass in the current network is the transmission path connected to the communication apparatus. Therefore, the communication apparatus may directly add the quantity of the plurality of transmission paths to the first packet as the value of the path quantity.

Optionally, the communication apparatus may alternatively update the value of the path quantity originally carried in the first packet, namely, the initial value of the path quantity, to set the path quantity. For example, when the first packet carries the initial value of the path quantity, the value of the path quantity is updated based on the initial value of the path quantity and the quantity of the plurality of transmission paths.

For example, in a process in which the sending apparatus sends the first packet to the communication apparatus, a sequence number (Psn) and the path quantity are carried in a packet header. After receiving the first packet, the communication apparatus may update the path quantity based on a quantity of transmission paths connected to the communication apparatus, to collect statistics on the transmission paths for load balancing in the network. In a possible implementation, the initial value of the path quantity may be empirically set. For example, the initial value is set to 1. Alternatively, the initial value of the path quantity is determined based on a transmission path connected between the communication apparatus and an upstream apparatus corresponding to the first packet. For example, the communication apparatus is the network node T0 in FIG. 5. The upstream apparatus is a sending apparatus, and the sending apparatus is connected to different communication apparatuses through a plurality of ports, to improve reliability and performance of a transmission network. In this case, if there are two transmission paths connected between the sending apparatus and the network node, the initial value of the path quantity added by the sending apparatus to the first packet before sending the first packet is 2. In other words, the sending apparatus sets the path information in the first packet, where the path quantity included in the path information is 2.

The foregoing is a process in which the sending apparatus sets the quantity of connected transmission paths to the initial value of the path quantity when the sending apparatus is also configured to collect statistics on the path information. In a possible case, a process of determining the initial value based on the transmission path connected between the communication apparatus and the upstream apparatus corresponding to the first packet may alternatively include: setting the initial value to 1 when a transmission path is connected between the communication apparatus and the upstream apparatus. FIG. 5 is still used as an example. Although there are two transmission paths connected between the sending apparatus and the network node T0, the sending apparatus does not participate in statistics collection of the path information. Therefore, the sending apparatus sets the initial value of the path quantity to 1, that is, starts to calculate only the quantity of transmission paths connected to the communication apparatus. The initial value of the path quantity is set, to flexibly select a network node from which setting of the path information starts, and implement statistics collection of transmission paths at a fine granularity of different network layers in the network. To be specific, the initial value of the path quantity that is carried in the first packet is set by the upstream apparatus. The upstream apparatus may be the sending apparatus in the foregoing embodiment, or may be another communication apparatus. For example, a communication apparatus S0 in FIG. 5 needs to set the path information for the received first packet. In this case, the initial value of the path quantity that is carried in the first packet is set by the communication apparatus T0 based on transmission paths connected to the communication apparatus T0.

Regardless of a manner in which the initial value of the path quantity is determined, for example, the communication apparatus may multiply the quantity of the plurality of transmission paths by the initial value, and an obtained product is an updated path quantity. For example, a formula is pkt.path_num=pkt.path_num*path_ group_size. pkt.path_num indicates the path quantity carried in the first packet, and path_group_size is the quantity of transmission paths connected to the communication apparatus, namely, a quantity of transmission paths corresponding to the first packet. When the plurality of transmission paths are transmission paths included in an ECMP group, path_group_size may also be referred to as ecmp_group_size, namely, a quantity of members in a current ECMP group. The current ECMP group may be one ECMP group, or may be a plurality of ECMP groups. In other words, the quantity of members in the current ECMP group may be a quantity of transmission paths included in one ECMP group, or may be a sum of quantities of transmission paths included in a plurality of ECMP groups. The product obtained by multiplying the quantity of the plurality of transmission paths by the initial value is a quantity of combinations of the plurality of transmission paths. For example, the communication apparatus is the network node S0 in FIG. 4, and the network node T0 sets the path quantity in the first packet received by the communication apparatus as 8. Because there are two transmission paths connected to the communication apparatus, the two transmission paths connected to the communication apparatus and the transmission paths connected to the network node T0 may be combined into 2*8=16 different transmission paths.

In a possible implementation, the communication apparatus may set the path identifier in the first packet, where the path identifier indicates a transmission path for transmission of the packet carrying the path information. For example, a process in which the communication apparatus sets the path identifier includes but is not limited to: determining a reference identifier of the transmission path for transmission of the first packet; and setting the path identifier in the first packet based on the determined reference identifier of the transmission path. The reference identifier is used to distinguish between different transmission paths in a plurality of transmission paths connected to the communication apparatus; and the path identifier is used to distinguish between different transmission paths in the plurality of transmission paths that are in the network in which the communication apparatus is located and that are used for load balancing of flows to which the plurality of packets belong.

Optionally, before determining the reference identifier, the communication apparatus further needs to select the transmission path for transmission of the first packet. The communication apparatus may directly select, based on path quality of each transmission path, the transmission path for transmission of the first packet. For example, the path quality is determined based on at least one type of information such as a link bandwidth, link load, or a queue depth of the transmission path. The transmission path is selected based on the path quality to perform transmission of the first packet, so that a transmission path with good path quality can share transmission of more packets. Alternatively, the communication apparatus may randomly select, from the transmission paths connected to the communication apparatus, a transmission path for transmission of the packet, or select, in a round robin (round robin, RR) manner, a transmission path for transmission of the packet. In addition, in a process of selecting the transmission path for the first packet, the communication apparatus may further consider a load balancing mode of the first packet. For example, the first packet further carries a second identifier for determining the load balancing mode of the first packet. In this case, the process in which the communication apparatus determines the transmission path includes: when the load balancing mode indicated by the second identifier is per-packet balancing, selecting, from the plurality of transmission paths, a transmission path for separate transmission of each packet; or when the load balancing mode indicated by the second identifier is per-flow balancing, selecting, from the plurality of transmission paths based on flow information of the packets, one transmission path for transmission of the packet. When second identifiers carried in the plurality of packets all indicate per-flow balancing and flow identifiers of the plurality of packets are the same, the transmission paths of the plurality of packets are the same. However, when second identifiers carried in the plurality of packets all indicate per-packet balancing, there is a high probability that the transmission paths of the plurality of packets are different.

In a possible implementation, a load balancing mode (LB_MODE) field included in the first packet is the second identifier, and has a length of Bit[0]. In this case, when LB_MODE is 0, the indicated load balancing mode is per-flow balancing; or when LB_MODE is 1, the indicated load balancing mode is per-packet balancing. Alternatively, when LB_MODE is 1, the indicated load balancing mode is per-flow balancing; or when LB_MODE is 0, the indicated load balancing mode is per-packet balancing. A correspondence between a value of the second identifier and the load balancing mode is not limited in this embodiment of this application. When the second identifier indicates per-packet balancing, for a process in which the communication apparatus selects the transmission path, refer to the process of selecting the transmission path in the foregoing embodiment. A transmission path for transmission of each packet may be selected based on path quality of the plurality of transmission paths, for example, a congestion degree or load, or may be randomly selected. In addition, transmission paths of different packets may be the same or may be different. When the second identifier indicates per-flow balancing, the communication apparatus performs hash calculation based on 5-tuple information of the packets to obtain an egress path index (index), and determines, based on the egress path index, one transmission path for transmission of the plurality of packets. The plurality of packets to be transmitted are a plurality of packets corresponding to per-flow balancing, for example, a plurality of packets included in a message that needs per-flow balancing. In addition, because the plurality of packets carry same flow information, the communication apparatus may perform hash calculation based on flow information of one packet to obtain the egress path index, or may separately perform hash calculation based on the flow information of the plurality of packets to obtain the egress path index, to check the egress path index. In the case of per-flow balancing, the communication apparatus may determine the transmission path through hash calculation. Therefore, per-flow balancing may also be referred to as per-flow hash (hash) balancing in some cases. In addition, the flow information may be the 5-tuple information in the foregoing embodiment, or may be 2-tuple information or other information indicating the receiving apparatus.

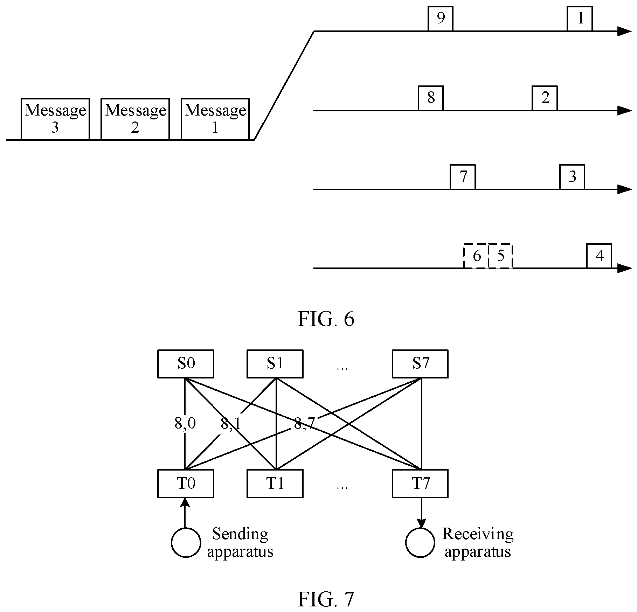

In addition, per-packet balancing may be uniformly used for the plurality of packets, or per-flow balancing may be uniformly used for the plurality of packets, or a hybrid balancing mode combining per-packet balancing and per-flow balancing is used. Refer to FIG. 6. A plurality of packets in FIG. 6 include packets of three messages: a message 1, a message 2, and a message 3. The message 2 has a high delay requirement, and second identifiers carried in a packet 5 and a packet 6 that are included in the message 2 indicates that a load balancing mode is per-flow balancing. In this case, the communication apparatus selects, based on flow information included in the message 2, a 4^{th} transmission path from top to bottom in FIG. 6 to perform transmission of the packet 5 and the packet 6 that are included in the message 2. Transmission of the packets having the high delay requirement is performed through the same transmission path, to avoid that a transmission delay of the packets is prolonged due to a transmission delay difference between different transmission paths and a packet transmission requirement cannot be met. The plurality of packets in FIG. 6 further include packets included in messages having a low delay requirement, for example, packets included in the message 1 and the message 3. In this case, transmission of packets 1 to 4 and 7 to 9 included in the message 1 and the message 3 is separately performed through four transmission paths in a per-packet balancing mode.

Regardless of a manner in which the communication apparatus selects the transmission path for the packet, the communication apparatus may set the path identifier based on the selected transmission path, to record the transmission path for transmission of the packet. The communication apparatus may add the path identifier to the first packet. For example, when the first packet does not carry an initial value of the path identifier, a value of the reference identifier is added to the first packet as a value of the path identifier. In FIG. 7, eight transmission paths connected to the communication apparatus T0 are respectively TO-SO, T0-S1, ..., and T0-S7, and reference identifiers are respectively 0, 1, 2, ..., and 7. The communication apparatus may add the value of the reference identifier to the first packet as the value of the path identifier. For a result of the adding, refer to FIG. 7. In FIG. 7, 0 indicates that the path identifier is 0, and 8 indicates that the path quantity is 8.

The communication apparatus may further update the path identifier originally carried in the first packet. For example, when the first packet carries the initial value of the path identifier, the value of the path identifier carried in the first packet is updated based on the initial value of the path identifier, the value of the reference identifier, and the quantity of the plurality of transmission paths. The reference identifier is used to distinguish between the plurality of transmission paths connected to the communication apparatus. For example, in FIG. 4, two transmission paths connected to the communication apparatus S0 are respectively S0-C0 and S0-C8, and reference identifiers are respectively 0 and 1; and two transmission paths connected to the communication apparatus S1 are respectively S1 - C1 and S1-C9, and reference identifiers are respectively 0 and 1.

Because transmission paths connected to different communication apparatuses may have a same reference identifier, path identifiers need to be determined based on reference identifiers, to distinguish between the transmission paths connected to the different communication apparatuses, for example, the transmission path S0-C0 and the transmission path S1-C1 in the foregoing example. In a possible case, the communication apparatus may multiply the initial value of the path identifier by the quantity of the plurality of transmission paths, and add a product obtained through the multiplication to the reference identifier, to obtain the path identifier. A calculation formula is, for example, pkt.path_id=pkt.path_id*path_group_size+path_member_id. pkt.path_id is the path identifier carried in the first packet, path_group_size indicates the quantity of transmission paths connected to the communication apparatus, and path_member_id indicates the reference identifier of the transmission path. When the plurality of transmission paths are transmission paths included in an ECMP group, path_member_id may also be understood as a sub-member index of the transmission path in the ECMP group.

The communication apparatus in FIG. 4 is still used as an example. For initial values of the path identifiers carried in the first packets respectively received by the communication apparatuses S0 and S1, refer to FIG. 7, and the initial values are equal to 0. In this case, a path identifier of S0-C0 obtained by the communication apparatus S0 through calculation is 0*2+0=0, and a path identifier of S1-C1 obtained by the communication apparatus S1 through calculation is 1*2+0=2. Different transmission paths in the network in which the communication apparatus is located are distinguished by performing the foregoing operations, so that the path identifier carried in the first packet may indicate the transmission path for transmission of the first packet. In addition, the communication apparatus may alternatively determine path identifiers of different transmission paths in another manner, for example, sequentially numbering based on the network location of the communication apparatus and the reference identifiers of the transmission paths. To be specific, in FIG. 4, the path identifier of S0-C0 is 0, a path identifier of S0-C8 is 1, the path identifier of S1-C1 is 2, and a path identifier of S1-C9 is 3.

In some embodiments of this application, the communication apparatus may select different manners to set the path information of the first packet based on the path information carried in the first packet. For example, in a case in which the first packet carries the initial value of the path quantity but does not carry the initial value of the path identifier, the communication apparatus may update the value of the path quantity, and then add the path identifier to the first packet. Alternatively, in a case in which the first packet does not carry the initial value of the path quantity and the initial value of the path identifier, the communication apparatus may separately add the path identifier and the path quantity by performing the foregoing operations. In addition, the communication apparatus may choose to set the path quantity and the path identifier in the first packet, or may choose to set any one of the path quantity and the path identifier. Path information set for different first packets may be the same, for example, may be a path quantity or a path identifier. Alternatively, path information set for different first packets may be different. For example, a first packet A carries a path quantity and a path identifier, and a first packet B carries a path quantity. This is not set in embodiments of this application.

A location of the path information set in the packet is not limited in this embodiment of this application. A packet header may be added to the packet to carry the path information, or the path information may be set in a reserved field in the packet. For example, the path quantity is set in a path quantity (path_number, PATH_NUM) field carried in the packet header, and the path identifier is set in a path identifier (path_identity document, PATH_ID) field carried in the packet header. In addition, the field in the packet and used to carry the path information may have any bit length that is set based on a requirement. For example, a length of the field corresponding to the path quantity is Bit[N2:0], and a length of the field corresponding to the path identifier is Bit[N3:0]. N2 and N3 may be any positive integers, and N2 and N3 may be the same or different.

In some embodiments of this application, the path information is set in the first packet, so that the receiving apparatus of the plurality of packets determines, based on the path information of any packet, whether a transmission exception occurs in the plurality of packets. A principle in which the path information can reflect a transmission exception is as follows: The communication apparatus detects path operating statuses of the plurality of transmission paths connected to the communication apparatus; and when a path operating status of any transmission path indicates that the any transmission path is faulty, updates the plurality of transmission paths based on the faulty transmission path.

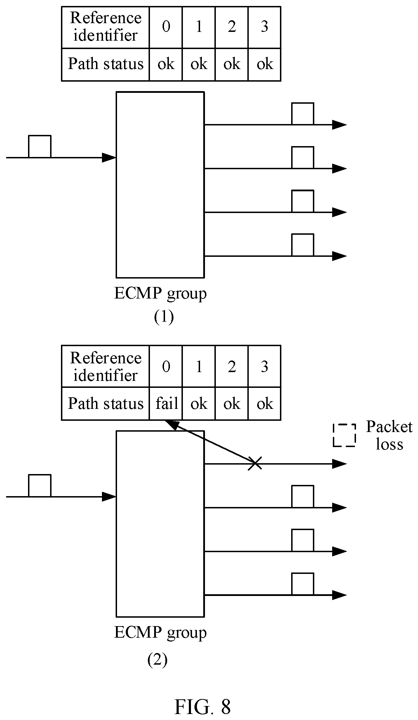

FIG. 8 is a diagram of a transmission path fault according to an embodiment of this application. In FIG. 8, the communication apparatus is connected to four transmission paths, and reference identifiers of the four transmission paths are respectively 0, 1, 2, and 3. In (1) in FIG. 8, path statuses of the four transmission paths are all ok (ok). Therefore, the communication apparatus determines that the quantity of plurality of transmission paths corresponding to the first packet is 4, and sets the path quantity based on 4. The communication apparatus then detects path operating statuses of the plurality of transmission paths. For a detection result, refer to (2) in FIG. 8. One transmission path is faulty, to be specific, a path operating status of a transmission path whose reference identifier is 0 is fail (fail). In this case, the communication apparatus determines that there are three transmission paths corresponding to the first packet, and subsequently sets the path quantity based on 3. In other words, when a transmission path connected to the communication apparatus is faulty, the path quantity carried in the first packet also changes, and subsequently, the receiving apparatus may implement transmission exception detection based on the change of the path quantity.

For example, in a case in which the path identifier needs to be set, in a process of setting the path identifier, the communication apparatus may set the path identifier based on the updated quantity of transmission paths. For example, in the foregoing embodiment, the path identifier is set based on 3. Alternatively, the communication apparatus may set the path identifier based on the quantity of transmission paths before the update. For example, in the foregoing embodiment, the path identifier is set based on 4. In addition, when detecting that a transmission path is faulty, the communication apparatus no longer selects the faulty transmission path as an egress for a subsequent entering packet.

S303: The communication apparatus sends the plurality of packets in which the path information has been set.

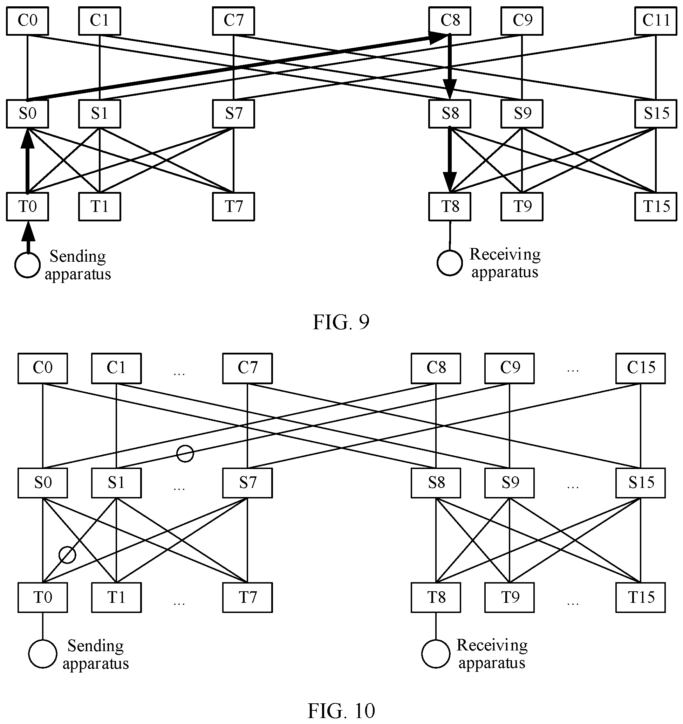

Regardless of a manner in which the communication apparatus sets the path information of the packets, the packets in which the path information has been set may be sent to the receiving apparatus. For example, the communication apparatus performs transmission of the plurality of packets based on the determined transmission paths, to implement load balancing. For example, as shown in FIG. 9, when a transmission path of any packet is a transmission path connected between S0 and C8, a communication apparatus S0 sends, to a communication apparatus C8, the packet in which the path information has been set, to send the packet to the receiving apparatus via the communication apparatus C8.

However, the communication apparatus that receives the packet continues to determine whether path information needs to be set for the packet, to continue to perform transmission of the packet. For example, for the communication apparatus C8 shown in FIG. 9, because the communication apparatus C8 is located in a third-level network, and the value of the first identifier of the packets is 0, the communication apparatus C8 determines that the path information carried in the packets does not need to be updated, performs transmission of the received packet, and sends the packet to a communication apparatus S8 as shown in FIG. 9.

The foregoing is a process in which the communication apparatus selects the transmission path to send the packet. In a possible implementation, the communication apparatus may further perform transmission of the packet based on a transmission path selected by the sending apparatus, where the transmission path selected by the sending apparatus is indicated by an initial value of a path quantity and an initial value of a path identifier. In this case, the communication apparatus determines, based on the initial value of the path quantity and the initial value of the path identifier carried in the first packet, and a first quantity of transmission paths connected to the communication apparatus, a transmission path for transmission of the first packet; and performs transmission, through the determined transmission path, of a second packet obtained based on the first packet.

For example, the initial value of the path quantity and the initial value of the path identifier carried in the first packet are determined based on transmission paths in the network in which the communication apparatus is located. The sending apparatus or the controller determines the initial value of the path quantity and the initial value of the path identifier based on the quantity of transmission paths in the current network and a selected transmission path. For example, in FIG. 10, there are a total of 16 transmission paths in a two-level network, and the sending apparatus selects a 3^{rd} transmission path to perform transmission of the first packet. Therefore, the initial value of the path quantity and the initial value of the path identifier carried in the first packet are respectively set to 16 and 3. In addition, in a process of selecting the transmission path, the sending apparatus or the controller may select a transmission path of each packet in a per-packet balancing mode or a per-flow balancing mode as described in S302.

Regardless of a manner in which the sending apparatus selects the transmission path of the first packet, and adds the path quantity and the path identifier to the first packet based on the selected transmission path, the first packet that carries the path quantity and the path identifier may be sent to the communication apparatus, for example, a communication apparatus T0 in FIG. 10. After receiving the first packet, the communication apparatus may obtain a parameter identifier of the transmission path through calculation based on the path identifier and the path quantity carried in the first packet. A calculation formula is, for example, local_link_id=pkt.path_id/pkt.path_num*local_path_group_size. local_link_id is the reference identifier of the transmission path, pkt.path_id is the path identifier carried in the first packet, pkt.path_num is the path quantity carried in the first packet, and local_path_group_size is the quantity of transmission paths connected to the communication apparatus. When the initial value of the path quantity is 16 and the initial value of the path identifier is 3, the reference identifier of the transmission path obtained by the communication apparatus through calculation is 3/16*8=1, and the selected transmission path is a transmission path connected between T0-S1 in FIG. 10.

After determining the transmission path, the communication apparatus may update, based on the first quantity, the initial value of the path quantity and the initial value of the path identifier carried in the first packet, to obtain the second packet. An update process is, for example, pkt.path _num=pkt.path_num/local_path_group_size, pkt.path_id=pkt.path_id %(pkt.path_num/local_path_group_size). The path quantity and the path identifier are updated, so that a communication apparatus that receives the second packet can continue to perform path selection based on an updated path quantity and an updated path identifier. FIG. 10 is used as an example. The updated path quantity is 2, and the updated path identifier is 1. The communication apparatus T0 sends the second packet that carries 2 and 1 to the communication apparatus S1. The communication apparatus S1 performs second path selection based on the path quantity and the path identifier that are carried in the second packet, calculates a reference identifier as 1, namely, a transmission path connected between S1 and C8 in FIG. 10, and continues to update the path quantity and the path identifier that are carried in the second packet to 1 and 0.

In a case in which the communication apparatus can detect a path operating status of a transmission path to determine whether a transmission path fault exists, because the first quantity indicates the quantity of transmission paths connected to the communication apparatus, even if a transmission path fault exists in the transmission paths connected to the communication apparatus, the first quantity does not change. For example, in (2) in FIG. 8, although there are three transmission paths that run normally, the first quantity is still equal to 4, and the communication apparatus subsequently performs path computation and obtains the second packet based on 4. In addition, the sending apparatus may perform transmission of all packets in the plurality of packets in a manner of specifying transmission paths, or may perform transmission of some packets in the plurality of packets in a manner of specifying transmission paths. The plurality of packets shown in FIG. 6 are still used as an example. Transmission of the packet 7 to the packet 9 included in the message 3 in the plurality of packets is performed in the manner of specifying transmission paths, and transmission of the packets included in the message 1 and the message 2 is performed in a manner of selecting transmission paths by the communication apparatus for load balancing and setting path information.

S304: The receiving apparatus receives the plurality of packets sent by the communication apparatus.

For example, the receiving apparatus receives the plurality of packets sent by an upstream apparatus, and the plurality of packets are sent by the communication apparatus. For example, as shown in FIG. 9, the receiving apparatus receives the plurality of packets sent by an upstream apparatus T8, and the plurality of packets are sent by the communication apparatus T0.

S305: The receiving apparatus parses the path information carried in each packet, and determines, based on the path information, whether a transmission exception occurs in the plurality of packets.

In a possible implementation, the path information carried in the packet includes at least one of a path quantity and a path identifier, and a process in which the receiving apparatus parses the path information and determines whether a transmission exception occurs includes: parsing at least one of path quantities and path identifiers that are carried in the plurality of packets, to obtain a parsing result of the path quantities and/or a parsing result of the path identifiers; and determining, when any parsing result of the path quantities and the path identifiers indicates an exception, that a transmission exception occurs in the plurality of packets. In other words, the receiving apparatus can flexibly choose to parse the path quantities or parse the path identifiers, and may determine, based on the parsing result regardless of which type of path information is parsed, whether a transmission exception occurs. The following separately describes a process of parsing the path quantities and a process of parsing the path identifiers.

In Parsing manner 1, the path quantities carried in the plurality of packets are compared; and when the path quantities carried in the plurality of packets are different, it is determined that the parsing result of the path quantities indicates an exception.

For example, the receiving apparatus reads the path quantities carried in the packets, compares the path quantities carried in different packets, and determines whether the quantities are the same, to determine, based on a comparison result, whether a transmission exception occurs. Because the plurality of packets are sent by the same communication apparatus to the receiving apparatus, the path quantity of the packets is determined based on the quantity of transmission paths connected to the communication apparatus, and reflects the total quantity of transmission paths that are in the network in which the communication apparatus is located and that support load balancing of the plurality of packets. In a normal case, the path quantities carried in the plurality of packets should be the same. For example, as shown in (1) in FIG. 8, the path quantities carried in the plurality of packets are all 4. However, when the path quantities carried in the plurality of packets are different, it indicates that a transmission path connected to the communication apparatus is faulty in a process of setting path information for a packet. For example, one transmission path is faulty in (2) in FIG. 8, and in this case, the path quantity carried in the packet changes to 3. The packets received by the receiving apparatus include a packet whose path quantity is 4 and also include a packet whose path quantity is 3. Different path quantities set by the same communication apparatus indicate that a transmission path is faulty. Therefore, the receiving apparatus determines that a parsing result of the path quantities indicates an exception. In addition, that path quantities carried in packets are different may indicate that path quantities carried in some packets are different. For example, a path quantity carried in a packet A is 3, and path quantities carried in other packets are 4. Alternatively, that path quantities carried in packets are different may indicate that the path quantities carried in all the packets are different.

In Parsing manner 2, reception information of the transmission paths of the packets is updated based on packet sequence numbers of the received packets and the path identifiers, where the reception information is used to collect statistics on the packets received on the transmission paths; and when the reception information of the transmission paths indicates packet loss, it is determined that the parsing result of the path identifiers indicates an exception.

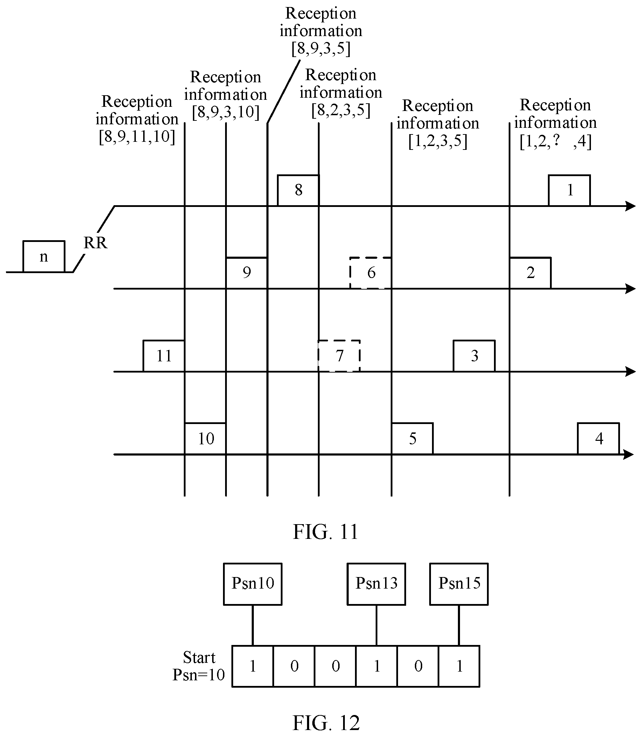

In a possible implementation, the receiving apparatus determines, based on the path identifiers carried in the packets, transmission paths on which statistics of reception information needs to be collected. For example, the path identifiers carried in the plurality of packets received by the receiving apparatus are respectively 1, 2, 3, and 4. Therefore, the receiving apparatus determines that statistics of reception information of four transmission paths needs to be collected: reception information of the transmission path 1, reception information of the transmission path 2, reception information of the transmission path 3, and reception information of the transmission path 4. The four transmission paths are shown in FIG. 11.

Reception information of a transmission path indicates a packet to be transmitted on the transmission path. In a possible case, statistics of the reception information may be collected by using a bitmap (bitmap) pattern.

FIG. 12 is a diagram of a structure of reception information. FIG. 12 shows a bitmap by using an example in which a start sequence number is 10. In this case, when receiving a packet whose packet sequence number is 10, the receiving apparatus determines, based on a path identifier carried in the packet, reception information corresponding to the transmission path, and assigns a value 1 to a bit corresponding to the packet sequence number 10 in the reception information. In addition, the receiving apparatus may assign the value 1 to a bit corresponding to a packet sequence number as described in the above embodiment, and a bit of a packet that is not received is a hole value 0 shown in FIG. 12. In some cases, the receiving apparatus may alternatively assign another value to the bit. This is not limited in embodiments of this application. Regardless of a manner in which the receiving apparatus updates the corresponding bits in the bitmap based on the packet sequence numbers of the received plurality of packets to obtain the reception information of the transmission paths, the receiving apparatus may determine, based on the reception information of the transmission paths, whether a packet is lost.

In a possible case, a process in which the receiving apparatus determines a packet loss includes but is not limited to: determining, based on the reception information of the transmission paths, a first sequence number of a packet that is not received on the transmission paths; determining, based on the reception information of the transmission paths, a maximum packet sequence number of a packet in the packets received on the transmission paths; and determining, when the first sequence number is less than the maximum packet sequence number corresponding to the transmission paths, that the packet corresponding to the first sequence number is lost. The first sequence number is the sequence number corresponding to the hole value in the reception information. For example, 11, 12, and 14 shown in FIG. 12 are all first sequence numbers.

There may be two reasons for the packet not received by the receiving apparatus. One is that transmission of the packet is still being performed on the transmission path, and the other is that the packet is lost. Therefore, the receiving apparatus needs to collect statistics on the maximum packet sequence number for the transmission paths, to determine, based on the maximum packet sequence number, whether transmission of the packet is still being performed. The maximum packet sequence number for the transmission paths may be determined based on a sequence number assigned with a value of 1 in the reception information. For example, a maximum packet sequence number shown in FIG. 12 is 15. For example, in a negotiation phase, the receiving apparatus may determine, based on a path quantity carried in a link setup request packet to be transmitted, a size of an entry recorded for the maximum packet sequence number for the transmission paths, namely, (MaxPSN[Path_num]), and update the entry based on the maximum packet sequence number for the transmission paths, to collect statistics on the maximum packet sequence number for the transmission paths. The entry may be less than or equal to the path quantity carried in the link setup request packet, namely, a largest path quantity in the network.

The receiving apparatus may collect statistics on the maximum packet sequence number and the first sequence number for the transmission paths at different moments. In FIG. 11, first sequence numbers of packets that are not received are 6 and 7. When the maximum packet sequence number for all the transmission paths is greater than 6 and 7, for example, reception information [8, 9, 11, 10] that is last collected in FIG. 11, transmission of packets after the packet 6 and the packet 7 is performed on all the four transmission paths. In other words, a possibility that transmission of the packet 6 and the packet 7 is still being performed is excluded. Therefore, the receiving apparatus can determine that the packet 6 and the packet 7 are lost.

In addition, the receiving apparatus may collect statistics on the reception information of the transmission paths based on the path identifiers, and may determine, in another manner, transmission paths on which statistics of reception information needs to be collected, for example, determine a plurality of transmission paths connected to the receiving apparatus, and collect statistics on reception information of the transmission paths, to determine, based on the reception information, whether a packet is lost.

In a possible implementation, the receiving apparatus may select, based on the path information carried in the packets, Parsing manner 1 or Parsing manner 2 to parse the packets. In a case in which the packets include the path quantities and the path identifiers, the receiving apparatus may obtain the parsing results of the path quantities and the path identifiers in Parsing manner 1 and Parsing manner 2, and when any of the parsing results is abnormal, determine that a transmission exception occurs in the plurality of packets. In addition, the receiving apparatus may alternatively select any of Parsing manner 1 or Parsing manner 2 to obtain the parsing result. This is not limited in embodiments of this application.

Regardless of a manner in which the receiving apparatus determines that a transmission exception occurs in the plurality of packets, the receiving apparatus may send a packet retransmission instruction to the sending apparatus of the plurality of packets when a transmission exception occurs in the plurality of packets, where the packet retransmission instruction instructs the sending apparatus to retransmit the plurality of packets. According to the process of determining a transmission exception in the foregoing embodiments, it can be learned that a transmission exception determined based on the path identifiers is a packet loss. In this case, supplementary transmission of the lost packet is implemented through packet retransmission, to alleviate an impact caused by the packet loss. A transmission exception determined based on the path quantities is a transmission path fault. In this case, the transmission path fault may also cause a packet loss. For example, if the communication apparatus continues to perform transmission of the packets through the faulty transmission path, a packet loss also occurs in the packets to be transmitted on the faulty transmission path. Therefore, an impact caused by the transmission path fault can also be alleviated through packet retransmission.

The plurality of packets to be retransmitted indicated by the packet retransmission instruction are not limited in embodiments of this application. The plurality of packets to be retransmitted may be all the packets being transmitted currently. The packets being transmitted currently, for example, packets to be transmitted in a transmission period that is empirically set. When a transmission exception is detected, all the packets need to be retransmitted, to trigger fast retransmission, thereby alleviating the impact caused by the packet loss. Alternatively, the sending apparatus may perform transmission of some packets in the plurality of packets, where the some packets may be one packet, or may be a plurality of packets. The some packets may be packets corresponding to a faulty transmission path, or may be all packets that have not arrived. For example, the receiving apparatus adds packet sequence numbers of all the packets that have not arrived to the packet retransmission instruction, to instruct the receiving apparatus to send all the packets that have not arrived. All the packets that have not arrived include packets that are lost and packets currently being transmitted and that have not arrived. The some packets may alternatively be packets that are lost. In a possible case, the packet retransmission instruction may further include a packet sequence number of a packet that is lost. The packet sequence number may be obtained through statistics collection based on the path identifiers and the reception information in Parsing manner 2 of S305. A packet sequence number of a packet that needs retransmission is carried in the packet retransmission instruction, to implement accurate retransmission of the packet. The sending apparatus needs to retransmit only a lost packet, effectively saving transmission resources and implementing efficient utilization of transmission resources.

In conclusion, according to the packet transmission method provided in embodiments of this application, during the packet transmission, the communication apparatus performs path marking on the packets based on the plurality of transmission paths through which transmission of the packets can be performed, and sets the path information, to determine, based on the path information carried in the packets, whether a transmission exception occurs, so that the transmission exception can be detected in a timely manner during the packet transmission. In addition, balancing of a transmission detection task is implemented through collaboration of the communication apparatus on the transmission paths, thereby reducing implementation complexity, resource costs, and the like on a terminal side, achieving more even load balancing, effectively reducing network congestion points, and improving packet transmission performance. After receiving the packets, the receiving apparatus may determine, based on the path information in the packets, whether a transmission exception occurs, and trigger packet retransmission when a transmission exception occurs. A transmission exception is detected in a timely manner, and retransmission of the packets is performed in a timely manner when a transmission exception occurs, to alleviate the impact of the packet loss. Even in a multipath load balancing scenario, selective retransmission can be implemented, retransmission efficiency can be improved, and a lossy network (lossy network) is supported.

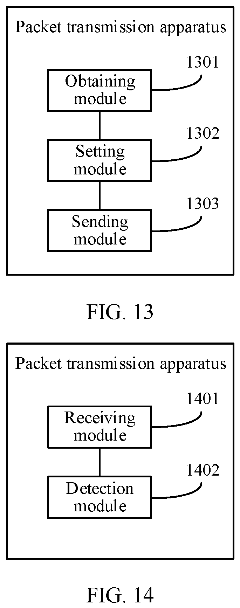

The foregoing describes the packet transmission method in embodiments of this application. Corresponding to the foregoing method, an embodiment of this application further provides a packet transmission apparatus. FIG. 13 is a diagram of a structure of a packet transmission apparatus according to an embodiment of this application. Based on the following plurality of modules shown in FIG. 13, the packet transmission apparatus shown in FIG. 13 can perform all or some operations of the communication apparatus shown in FIG. 3. It should be understood that the apparatus may include more additional modules than the shown modules, or some of the shown modules are omitted. This is not limited in embodiments of this application. As shown in FIG. 13, the apparatus includes:
an obtaining module 1301, configured to obtain a plurality of packets including a first packet;
a setting module 1302, configured to: determine a plurality of transmission paths corresponding to the plurality of packets, and set path information in the plurality of packets based on the plurality of transmission paths, where path information in any packet indicates changes of the paths for transmission of the plurality of packets and/or a transmission path of the any packet, and the plurality of transmission paths are used for load balancing of the plurality of packets; and
a sending module 1303, configured to send the plurality of packets in which the path information has been set.

In a possible implementation, the first packet carries a first identifier, and the setting module 1302 is further configured to: when the first identifier carried in the first packet successfully matches a network location of the communication apparatus, perform an operation of setting the path information in the first packet based on the plurality of transmission paths.

In a possible implementation, the path information includes at least one of a path quantity and a path identifier, the path quantity indicates a total quantity of the plurality of transmission paths that are in a network in which the communication apparatus is located and that support load balancing of the plurality of packets, and the path identifier indicates a transmission path for transmission of a packet carrying the path information.

In a possible implementation, the setting module 1302 is configured to: when the first packet carries an initial value of the path quantity, update a value of the path quantity based on the initial value of the path quantity and the quantity of the plurality of transmission paths; or when the first packet does not carry an initial value of the path quantity, add the quantity of the plurality of transmission paths to the first packet as a value of the path quantity.

In a possible implementation, the initial value of the path quantity is determined based on a transmission path connected between the communication apparatus and an upstream apparatus corresponding to the first packet.

In a possible implementation, the setting module 1302 is configured to: determine a reference identifier of a transmission path for transmission of the first packet, where the reference identifier is used to distinguish between different transmission paths in a plurality of transmission paths connected to the communication apparatus; and set the path identifier in the first packet based on the determined reference identifier of the transmission path, where the path identifier is used to distinguish between different transmission paths in the plurality of transmission paths for load balancing of the plurality of packets in the network in which the communication apparatus is located.

In a possible implementation, the setting module 1302 is configured to: when the first packet carries an initial value of the path identifier, update, based on the initial value of the path identifier, a value of the reference identifier, and the quantity of the plurality of transmission paths, a value of the path identifier carried in the first packet; or when the first packet does not carry an initial value of the path identifier, add a value of the reference identifier to the first packet as a value of the path identifier.

In a possible implementation, the setting module 1302 is configured to: detect path operating statuses of the plurality of transmission paths connected to the communication apparatus; and when a path operating status of any transmission path indicates that the any transmission path is faulty, update the plurality of transmission paths based on the faulty transmission path, and determine, based on a plurality of updated transmission paths, the plurality of transmission paths corresponding to the plurality of packets.

In a possible implementation, the first packet further carries a second identifier for determining a load balancing mode of the first packet, and the setting module 1302 is further configured to: when the load balancing mode indicated by the second identifier is per-packet balancing, select, from the plurality of transmission paths, a transmission path for separate transmission of each packet; or when the load balancing mode indicated by the second identifier is per-flow balancing, select, from the plurality of transmission paths based on flow information of the plurality of packets, one transmission path for transmission of the plurality of packets.

In a possible implementation, the first packet further carries an initial value of a path quantity and an initial value of a path identifier, and the setting module 1302 is further configured to: determine, based on the initial value of the path quantity and the initial value of the path identifier carried in the first packet, and a first quantity of transmission paths connected to the communication apparatus, a transmission path for transmission of the first packet; and perform transmission, through the determined transmission path, of a second packet obtained based on the first packet.

In a possible implementation, the setting module 1302 is further configured to: update, based on the first quantity, the initial value of the path quantity and the initial value of the path identifier carried in the first packet, to obtain the second packet.

In a possible implementation, the initial value of the path quantity and the initial value of the path identifier are determined based on a transmission path in a network in which the communication apparatus is located.

In a possible implementation, the path information in any packet is used by a receiving apparatus of the plurality of packets to determine whether a transmission exception occurs in the plurality of packets.

During the packet transmission performed by the apparatus, the communication apparatus performs path marking on the packets based on the plurality of transmission paths through which transmission of the packets can be performed, and sets the path information, to determine, based on the path information carried in the packets, whether a transmission exception occurs, so that the transmission exception can be detected in a timely manner during the packet transmission. In addition, balancing of a transmission detection task is implemented through collaboration of the communication apparatus on the transmission paths, thereby reducing implementation complexity and resource costs on a terminal side, achieving more even load balancing, effectively reducing network congestion points, and improving packet transmission performance.

An embodiment of this application further provides another packet transmission apparatus. FIG. 14 is a diagram of a structure of a packet transmission apparatus according to an embodiment of this application. Based on the following plurality of modules shown in FIG. 14, the packet transmission apparatus shown in FIG. 14 can perform all or some operations of the receiving apparatus shown in FIG. 3. It should be understood that the apparatus may include more additional modules than the shown modules, or some of the shown modules are omitted. This is not limited in embodiments of this application. As shown in FIG. 14, the apparatus includes:
a receiving module 1401, configured to receive a plurality of packets sent by a communication apparatus; and
a detection module 1402, configured to parse path information carried in each packet, and determine, based on the path information, whether a transmission exception occurs in the plurality of packets.

In a possible implementation, the apparatus further includes: a sending module, configured to: send a packet retransmission instruction to a sending apparatus of the plurality of packets when a transmission exception occurs in the plurality of packets, where the packet retransmission instruction instructs the sending apparatus to retransmit at least one of the plurality of packets.

In a possible implementation, the path information includes at least one of a path quantity and a path identifier, and the detection module 1402 is configured to: parse at least one of path quantities and path identifiers that are carried in the plurality of packets, to obtain a parsing result of the path quantities and/or a parsing result of the path identifiers; and determine, when any parsing result of the path quantities and the path identifiers indicates an exception, that a transmission exception occurs in the plurality of packets.

In a possible implementation, the detection module 1402 is configured to: compare the path quantities carried in the plurality of packets; and determine, when the path quantities carried in the plurality of packets are different, that the parsing result of the path quantities indicates an exception.

In a possible implementation, the detection module 1402 is configured to: update reception information of a transmission path of the packets based on a packet sequence number of a received packet and a path identifier, where the reception information is used to collect statistics on packets received on the transmission path; and determine, when the reception information of the transmission paths indicates packet loss, that the parsing result of the path identifiers indicates an exception.

In a possible implementation, the detection module 1402 is further configured to: determine, based on the reception information of the transmission paths, a first sequence number of a packet that is not received on the transmission paths; determine, based on the reception information of the transmission paths, a maximum packet sequence number of a packet in the packets received on the transmission paths; and determine, when the first sequence number is less than the maximum packet sequence number corresponding to the transmission paths, that the packet corresponding to the first sequence number is lost.

In a possible implementation, the packet retransmission instruction includes the packet sequence number of the packet that is lost.

After receiving the packets, the apparatus may determine, based on the path information in the packets, whether a transmission exception occurs. A detection process is simple, and detection timeliness is high.

It should be understood that, when the apparatus provided in FIG. 13 or FIG. 14 implements functions of the apparatus, division into the foregoing functional modules is merely used as an example for description. During actual application, the foregoing functions may be allocated to different functional modules for implementation based on a requirement. In other words, an internal structure of a device is divided into different functional modules, to implement all or some of the functions described above. In addition, the apparatuses provided in the foregoing embodiments belong to a same concept as the method embodiments. For specific implementation processes thereof, refer to the method embodiments. Details are not described herein again.

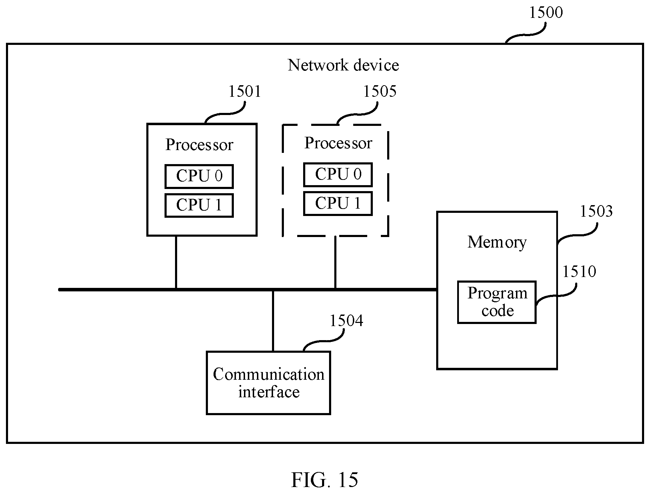

FIG. 15 is a diagram of a structure of a network device 1500 according to an example embodiment of this application. The network device 1500 shown in FIG. 15 is configured to perform operations related to the packet transmission method shown in FIG. 3. The network device 1500 is, for example, a switch or a router, and the network device 1500 may be implemented by using a general bus architecture.

As shown in FIG. 15, the network device 1500 includes at least one processor 1501, a memory 1503, and at least one communication interface 1504.

The processor 1501 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing units, NPU), a data processing unit (data processing unit, DPU), a microprocessor, or one or more integrated circuits configured to implement the solutions of this application. For example, the processor 1501 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field programmable logic gate array (field programmable gate array, FPGA), a generic array logic (generic array logic, GAL), or any combination thereof. The processor can implement or execute various logical blocks, modules, and circuits described with reference to the content disclosed in embodiments of this application. The processor may alternatively be a combination of processors implementing a computing function, for example, a combination of one or more microprocessors, or a combination of the DSP and a microprocessor.

Optionally, the network device 1500 further includes a bus. The bus is configured to perform transmission of information between components of the network device 1500. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 15, but this does not mean that there is only one bus or only one type of bus.

The memory 1503 is, for example, a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction or a data structure and can be accessed by a computer, but is not limited thereto. For example, the memory 1503 exists independently, and is connected to the processor 1501 through a bus. Alternatively, the memory 1503 may be integrated with the processor 1501.

The communication interface 1504 is configured to communicate with another device or a communication network via any apparatus like a transceiver. The communication network may be the Ethernet, a radio access network (RAN), a wireless local area network (wireless local area network, WLAN), or the like. The communication interface 1504 may include a wired communication interface, and may further include a wireless communication interface. Specifically, the communication interface 1504 may be an Ethernet (Ethernet) interface, a fast Ethernet (fast ethernet, FE) interface, a gigabit Ethernet (gigabit ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 1504 may be used by the network device 1500 to communicate with another device.

During specific implementation, in an embodiment, the processor 1501 may include one or more CPUs, such as a CPU 0 and a CPU 1 shown in FIG. 15. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 1500 may include a plurality of processors, for example, a processor 1501 and a processor 1505 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the network device 1500 may further include an output device and an input device. The output device communicates with the processor 1501, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 1501, and may receive an input from a user in a plurality of manners. For example, the input device may be a mouse, a keyboard, a touchscreen device, a sensing device, or the like.

In some embodiments, the memory 1503 is configured to store program code 1510 for executing the solutions of this application, and the processor 1501 may execute the program code 1510 stored in the memory 1503. In other words, the network device 1500 may implement, through the processor 1501 and the program code 1510 in the memory 1503, the packet transmission method provided in the method embodiments. The program code 1510 may include one or more software modules. Optionally, the processor 1501 may also store program code or instructions for executing the solutions of this application.

In a specific embodiment, the network device 1500 in this embodiment of this application may correspond to a computing device in the foregoing method embodiments.

The steps of the packet transmission method shown in FIG. 3 are completed by an integrated logic circuit of hardware in the processor of the network device 1500 or instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

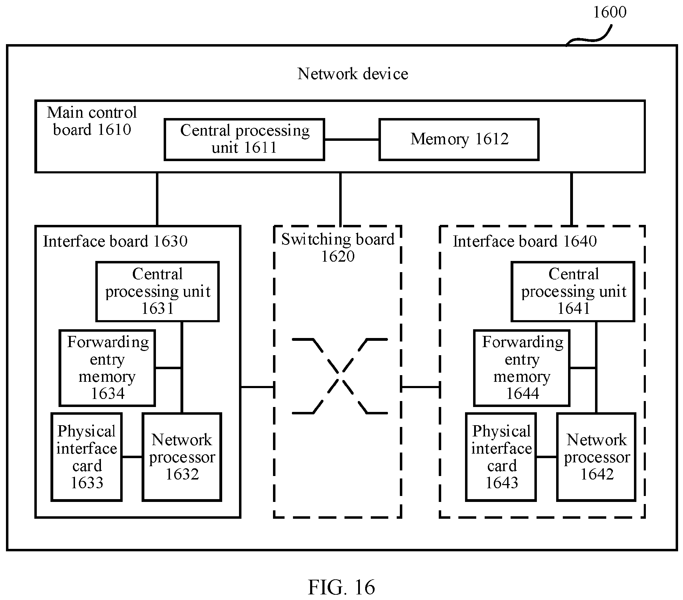

FIG. 16 is a diagram of a structure of a network device 1600 according to another example embodiment of this application. The network device 1600 shown in FIG. 16 is configured to perform all or some of operations related to the packet transmission method shown in FIG. 3 above. The network device 1600 is, for example, a switch or a router, and the network device 1600 may be implemented by using a general bus architecture.

As shown in FIG. 16, the network device 1600 includes a main control board 1610 and an interface board 1630.

The main control board is also referred to as a main processing unit (main processing unit, MPU) or a route processor card (route processor card). The main control board 1610 is configured to control and manage components in the network device 1600, including functions of route calculation, device management, device maintenance, and protocol processing. The main control board 1610 includes a central processing unit 1611 and a memory 1612.

The interface board 1630 is also referred to as a line interface unit (line processing unit, LPU), a line card (line card), or a service board. The interface board 1630 is configured to provide various service interfaces and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1630 includes a central processing unit 1631, a network processor 1632, a forwarding entry memory 1634, and a physical interface card (physical interface card, PIC) 1633.

The central processing unit 1631 on the interface board 1630 is configured to control and manage the interface board 1630 and communicate with the central processing unit 1611 on the main control board 1610.

The network processor 1632 is configured to implement packet forwarding processing. A form of the network processor 1632 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 1632 is configured to forward a received packet based on a forwarding table stored in the forwarding entry memory 1634. If a destination address of the packet is an address of the network device 1600, the packet is sent to a CPU (for example, the central processing unit 1631) for processing. If a destination address of the packet is not an address of the network device 1600, the forwarding table is searched for a next hop and an outbound interface that correspond to the destination address based on the destination address, and the packet is forwarded to the outbound interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of the forwarding chip, for example, implement software forwarding based on a general-purpose CPU, so that the forwarding chip is not needed in the interface board.

The physical interface card 1633 is configured to implement an interconnection function at a physical layer. Original traffic enters the interface board 1630 from the physical interface card 1633, and a processed packet is sent from the physical interface card 1633. The physical interface card 1633, also referred to as a subcard, may be mounted on the interface board 1630, and is responsible for converting an optical/electrical signal into a packet, performing validity check on the packet, and forwarding the packet to the network processor 1632 for processing. In some embodiments, the central processing unit 1631 may also perform a function of the network processor 1632, for example, implement software forwarding based on a general-purpose CPU, so that the network processor 1632 is not needed in the physical interface card 1633.

Optionally, the network device 1600 includes a plurality of interface boards. For example, the network device 1600 further includes an interface board 1640. The interface board 1640 includes a central processing unit 1641, a network processor 1642, a forwarding entry memory 1644, and a physical interface card 1643. Functions and implementations of components in the interface board 1640 are the same as or similar to those of the interface board 1630. Details are not described herein again.

Optionally, the network device 1600 further includes a switching board 1620. The switching board 1620 may also be referred to as a switch fabric unit (switch fabric unit, SFU). When the network device 1600 has a plurality of interface boards, the switching board 1620 is configured to perform data exchange between the interface boards. For example, the interface board 1630 and the interface board 1640 may communicate with each other through the switching board 1620.

The main control board 1610 is coupled to the interface board. For example, the main control board 1610, the interface board 1630, the interface board 1640, and the switching board 1620 are connected to a system backplane through a system bus for interworking. In a possible implementation, an inter-process communication (inter-process communication, IPC) protocol channel is established between the main control board 1610 and the interface board 1630, and between the main control board 1610 and the interface board 1640, and communication between the main control board 1610 and the interface board 1630 and between the main control board 1610 and the interface board 1640 is performed through the IPC channel.

Logically, the network device 1600 includes a control plane and a forwarding plane. The control plane includes the main control board 1610 and the central processing unit 1611. The forwarding plane includes components for performing forwarding, such as the forwarding entry memory 1634, the physical interface card 1633, and the network processor 1632. The control plane performs functions such as a function of a router, a function of generating a forwarding table, a function of processing signaling and protocol packets, and a function of configuring and maintaining a status of the network device. The control plane delivers the generated forwarding table to the forwarding plane. On the forwarding plane, the network processor 1632 searches, based on the forwarding table delivered by the control plane, a table for forwarding the packet received by the physical interface card 1633. The forwarding table delivered by the control plane may be stored in the forwarding entry memory 1634. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be jointly implemented by the plurality of switching boards. In a centralized forwarding architecture, the network device may not need the switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device in a distributed architecture is greater than that of a network device in a centralized architecture. Optionally, a form of the network device may alternatively be a single board. To be specific, there is no switching board, and functions of the interface board and the main control board are integrated into the board. In this case, the central processing unit on the interface board and the central processing unit on the main control board may be combined into one central processing unit on the board, to perform functions obtained by combining the two central processing units. The network device in this form (for example, a network device like a low-end switch or router) has a low data exchange and processing capability. A specific architecture that is to be used depends on a specific networking deployment scenario. This is not limited herein.

In a specific embodiment, the network device 1600 corresponds to the packet transmission apparatus shown in FIG. 13 or FIG. 14. In some embodiments, the setting module 1302 in the packet transmission apparatus shown in FIG. 13 is equivalent to the central processing unit 1611 or the network processor 1632 in the network device 1600.

An embodiment of this application further provides a communication apparatus. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. In addition, when the processor executes the instructions stored in the memory, the processor is caused to perform the packet transmission method.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machine (advanced RISC machines, ARM) architecture.

Further, in an optional embodiment, the memory may include a read-only memory and a random access memory, and provide instructions and data for the processor. The memory may further include a non-volatile random access memory. For example, the memory may further store information about a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and is used as an external cache. By way of example, and not limitation, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a packet transmission device. The device includes a processor, and the processor is configured to load and run at least one instruction, so that the packet transmission device implements the packet transmission method provided in embodiments of this application. Optionally, the device further includes a memory, the memory is coupled to the processor, and the memory is configured to store at least one instruction.

An embodiment of this application further provides a packet transmission system. The system includes a communication apparatus and a receiving apparatus. The communication apparatus and the receiving apparatus are configured to interactively perform the packet transmission method provided in embodiments of this application.

An embodiment of this application further provides a computer-readable storage medium. The storage medium stores at least one instruction, and the instruction is loaded and executed by a processor, to cause a computer to implement the packet transmission method according to any one of the above.

An embodiment of this application further provides a computer program (product). When the computer program is executed by a computer, a processor or the computer may be caused to perform corresponding steps and/or procedures in the foregoing method embodiments.

An embodiment of this application further provides a chip. The chip includes a processor, configured to invoke, from a memory, instructions stored in the memory and run the instructions, to cause a communication device in which the chip is installed to perform the packet transmission method according to any one of the above.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform the packet transmission method according to any one of the above.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive), or the like.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the first packet and the like in this application are all obtained in a case of full authorization.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

When software is used to implement the embodiments, all or some of the embodiments may be implemented in a form of a computer program product. The computer program product includes one or more computer program instructions. For example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable packet transmission apparatus, so that when the program code is executed by the computer or another programmable packet transmission apparatus, a function/an operation specified in the flowchart and/or the block diagram is implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a specific working process of the foregoing system, device, and module, refer to a corresponding process in the foregoing method embodiments. Details are not described herein.

In the several embodiments provided in this application, it should be understood that the disclosed system, device, and method may be implemented in other manners. For example, the described device embodiment is merely an example. For example, division of modules is merely division of logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by some interfaces, devices, or modules, or may be electrical, mechanical, or other forms of connection.

The modules described as separate components may or may not be physically separate, and components displayed as modules may or may not be physical modules, to be specific, may be located at one location, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to the prior art, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

Terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should be further understood that although the following descriptions use terms such as "first" and "second" to describe various elements, these elements should not be limited by the terms. These terms are simply used to distinguish one element from another. For example, a first image may be referred to as a second image, and similarly, a second image may be referred to as a first image without departing from the scope of the various examples. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that the term "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

## Claims

1. A packet transmission method, wherein the method is applied to a communication apparatus, and the method comprises:
obtaining a plurality of packets comprising a first packet;
determining a plurality of transmission paths corresponding to the plurality of packets, and setting path information in the plurality of packets based on the plurality of transmission paths, wherein path information in any packet indicates changes of the paths for transmission of the plurality of packets and/or a transmission path of the any packet, and the plurality of transmission paths are used for load balancing of the plurality of packets; and
sending the plurality of packets in which the path information has been set.

2. The method according to claim 1, wherein the first packet carries a first identifier for determining a network location at which path information needs to be set, and after the obtaining the plurality of packets, the method further comprises:
when the first identifier carried in the first packet successfully matches a network location of the communication apparatus, performing an operation of setting the path information in the first packet based on the plurality of transmission paths.

3. The method according to claim 1 or 2, wherein the path information comprises at least one of a path quantity and a path identifier, the path quantity indicates a total quantity of the plurality of transmission paths that are in a network in which the communication apparatus is located and that support load balancing of the plurality of packets, and the path identifier indicates a transmission path for transmission of a packet carrying the path information.

4. The method according to claim 3, wherein the setting the path information in the plurality of packets based on the plurality of transmission paths comprises:
when the first packet carries an initial value of the path quantity, updating a value of the path quantity based on the initial value of the path quantity and the quantity of the plurality of transmission paths; or
when the first packet does not carry an initial value of the path quantity, adding the quantity of the plurality of transmission paths to the first packet as a value of the path quantity.

5. The method according to claim 4, wherein the initial value of the path quantity is determined based on a transmission path connected between the communication apparatus and an upstream apparatus corresponding to the first packet.

6. The method according to any one of claims 3 to 5, wherein the setting the path information in the plurality of packets based on the plurality of transmission paths comprises:
determining a reference identifier of a transmission path for transmission of the first packet, wherein the reference identifier is used to distinguish between different transmission paths in a plurality of transmission paths connected to the communication apparatus; and
setting the path identifier in the first packet based on the determined reference identifier of the transmission path, wherein the path identifier is used to distinguish between different transmission paths in the plurality of transmission paths for load balancing of the plurality of packets in the network in which the communication apparatus is located.

7. The method according to claim 6, wherein the setting the path identifier in the first packet based on the determined reference identifier of the transmission path comprises:
when the first packet carries an initial value of the path identifier, updating, based on the initial value of the path identifier, a value of the reference identifier, and the quantity of the plurality of transmission paths, a value of the path identifier carried in the first packet; or
when the first packet does not carry an initial value of the path identifier, adding a value of the reference identifier to the first packet as a value of the path identifier.

8. The method according to any one of claims 1 to 7, wherein determining the plurality of transmission paths corresponding to the plurality of packets comprises:
detecting path operating statuses of the plurality of transmission paths connected to the communication apparatus; and
when a path operating status of any transmission path indicates that the any transmission path is faulty, updating the plurality of transmission paths based on the faulty transmission path, and determining, based on a plurality of updated transmission paths, the plurality of transmission paths corresponding to the plurality of packets.

9. The method according to any one of claims 1 to 8, wherein the first packet further carries a second identifier for determining a load balancing mode of the first packet, and before the sending the plurality of packets in which the path information has been set, the method further comprises:
when the load balancing mode indicated by the second identifier is per-packet balancing, selecting, from the plurality of transmission paths, a transmission path for separate transmission of each packet; or
when the load balancing mode indicated by the second identifier is per-flow balancing, selecting, from the plurality of transmission paths based on flow information of the plurality of packets, one transmission path for transmission of the plurality of packets.

10. The method according to claim 1 or 2, wherein the first packet further carries an initial value of a path quantity and an initial value of a path identifier, and after the determining the plurality of transmission paths corresponding to the plurality of packets, the method further comprises:
determining, based on the initial value of the path quantity and the initial value of the path identifier carried in the first packet, and a first quantity of transmission paths connected to the communication apparatus, a transmission path for transmission of the first packet; and
performing transmission, through the determined transmission path, of a second packet obtained based on the first packet.

11. The method according to claim 10, wherein before the performing transmission, through the determined transmission path, of the second packet obtained based on the first packet, the method further comprises:
updating, based on the first quantity, the initial value of the path quantity and the initial value of the path identifier carried in the first packet, to obtain the second packet.

12. The method according to claim 10 or 11, wherein the initial value of the path quantity and the initial value of the path identifier are determined based on a transmission path in a network in which the communication apparatus is located.

13. The method according to any one of claims 1 to 9, wherein the path information in any packet is used by a receiving apparatus of the plurality of packets to determine whether a transmission exception occurs in the plurality of packets.

14. A packet transmission method, wherein the method is applied to a receiving apparatus, and the method comprises:
receiving a plurality of packets sent by a communication apparatus; and
parsing path information carried in each packet, and determining, based on the path information, whether a transmission exception occurs in the plurality of packets.

15. The method according to claim 14, wherein the method further comprises:
sending a packet retransmission instruction to a sending apparatus of the plurality of packets when a transmission exception occurs in the plurality of packets, wherein the packet retransmission instruction instructs the sending apparatus to retransmit at least one of the plurality of packets.

16. The method according to claim 14 or 15, wherein the path information comprises at least one of a path quantity and a path identifier, and the parsing the path information carried in each packet, and determining, based on the path information, whether a transmission exception occurs in the plurality of packets comprises:
parsing at least one of path quantities and path identifiers that are carried in the plurality of packets, to obtain a parsing result of the path quantities and/or a parsing result of the path identifiers; and
determining, when any parsing result of the path quantities and the path identifiers indicates an exception, that a transmission exception occurs in the plurality of packets.

17. The method according to claim 16, wherein the parsing at least one of the path quantities and the path identifiers that are carried in the plurality of packets, to obtain the parsing result of the path quantities and/or the parsing result of the path identifiers comprises:
comparing the path quantities carried in the plurality of packets; and
determining, when the path quantities carried in the plurality of packets are different, that the parsing result of the path quantities indicates an exception.

18. The method according to claim 16 or 17, wherein the parsing at least one of the path quantities and the path identifiers that are carried in the plurality of packets, to obtain the parsing result of the path quantities and/or the parsing result of the path identifiers comprises:
updating reception information of a transmission path of the packets based on a packet sequence number of a received packet and a path identifier, wherein the reception information is used to collect statistics on packets received on the transmission path; and
determining, when the reception information of the transmission paths indicates packet loss, that the parsing result of the path identifiers indicates an exception.

19. The method according to claim 18, wherein before the determining, when the reception information of the transmission paths indicates packet loss, that the parsing result of the path identifiers indicates an exception, the method further comprises:
determining, based on the reception information of the transmission paths, a first sequence number of a packet that is not received on the transmission paths;
determining, based on the reception information of the transmission paths, a maximum packet sequence number of a packet in the packets received on the transmission paths; and
determining, when the first sequence number is less than the maximum packet sequence number corresponding to the transmission paths, that the packet corresponding to the first sequence number is lost.

20. The method according to claim 18 or 19, wherein the packet retransmission instruction comprises the packet sequence number of the packet that is lost.

21. A packet transmission apparatus, wherein the apparatus is used in a communication apparatus, and comprises:
a transceiver module, configured to perform receiving-related and/or sending-related operations performed by the communication apparatus in the method according to any one of claims 1 to 13; and
a processing module, configured to perform operations other than the receiving-related and/or sending-related operations performed by the communication apparatus in the method according to any one of claims 1 to 13.

22. A packet transmission apparatus, wherein the apparatus is used in a receiving apparatus, and comprises:
a transceiver module, configured to perform receiving-related and/or sending-related operations performed by the receiving apparatus in the method according to any one of claims 14 to 20; and
a processing module, configured to perform operations other than the receiving-related and/or sending-related operations performed by the receiving apparatus in the method according to any one of claims 14 to 20.

23. A packet transmission device, wherein the device comprises a processor, and the processor is configured to load and execute at least one instruction, to cause the packet transmission device to implement the packet transmission method according to any one of claims 1 to 13 or the packet transmission method according to any one of claims 14 to 20.

24. The device according to claim 23, wherein the device further comprises a memory, the memory is coupled to the processor, and the memory stores the at least one instruction.

25. A packet transmission system, wherein the system comprises a communication apparatus and a receiving apparatus, the communication apparatus is configured to implement the packet transmission method according to any one of claims 1 to 13, and the receiving apparatus is configured to implement the packet transmission method according to any one of claims 14 to 20.

26. A computer-readable storage medium, wherein the computer-readable storage medium stores at least one instruction, and the instruction is loaded and executed by a processor to implement the packet transmission method according to any one of claims 1 to 13 or the packet transmission method according to any one of claims 14 to 20.

27. A chip, wherein the chip comprises a processor, and the processor is configured to run program instructions or code, to cause a device comprising the chip to perform the packet transmission method according to any one of claims 1 to 13 or the packet transmission method according to any one of claims 14 to 20.

28. The chip according to claim 27, wherein the chip further comprises an input interface, an output interface, and a memory; the input interface, the output interface, the processor, and the memory are connected through an internal connection path; and the memory comprises the program instructions or the code.
